# EUROPEAN PATENT SPECIFICATION

(11) **EP 4 099 726 B1**
(45) Date of publication and mention of the grant of the patent: **15.10.2025**
(21) Application number: 22176635.5
(22) Date of filing: 01.06.2022
(51) Int. Cl.: G06F 9/48, H04W 4/02, H04L 67/12, H04W 4/44

(54) **METHOD, APPARATUS, AND SYSTEM FOR ENABLING REMOTE USE OF A VEHICLE'S COMPUTATIONAL RESOURCES VIA NETWORK CONNECTION(S)**
VERFAHREN, VORRICHTUNG UND SYSTEM ZUR ERMÖGLICHUNG EINER FERNNUTZUNG DER RECHENRESSOURCEN EINES FAHRZEUGS ÜBER NETZWERKVERBINDUNGEN
PROCÉDÉ, APPAREIL ET SYSTÈME POUR PERMETTRE UNE UTILISATION À DISTANCE DE RESSOURCES DE CALCUL D'UN VÉHICULE PAR L'INTERMÉDIAIRE D'UNE OU PLUSIEURS CONNEXIONS DE RÉSEAU

(30) Priority: 04.06.2021 US 202117339647
(43) Date of publication of application: 07.12.2022
(73) Proprietor: HERE Global B.V., 5611 ZT Eindhoven (NL)
(72) Inventor: Falla Cepeda,, David, 10405 Berlin (DE)
(74) Representative: Potter Clarkson

(56) References cited:
- EP-A1- 3 594 811

## Description

### BACKGROUND

Service providers are continually challenged to deliver value and convenience to consumers by, for example, providing compelling network services. To support such services, service providers often manage processing resources and process large data assets in the cloud for access by different consumers, businesses, and other entities. As the service providers constantly deploy and scale services, cloud computing grows quickly, and the service providers have to explore other resources for different applications as well as to keep up with new demands, in order to manage costs while ensuring performance. Accordingly, service providers face significant technical challenges to explore potentially unused processing resources and expand cloud computing infrastructure.

Document D1 (EP 3594811 A1) relates to managing computational tasks. In a more particular example, the disclosure relates to technologies for managing computational tasks in a vehicle context. The document discloses a method which receives a computational task; determines a processing resource requirement of the computational task; determines available processing resources of a first temporal vehicular virtual server (TVVS) at a first timestamp, the first TVVS comprising first participant vehicles proximally located relative to one another on a road segment at the first timestamp; determines vehicle movement data of the first participant vehicles; estimates available processing resources of the first TVVS at a second timestamp subsequent to the first timestamp based on the vehicle movement data of the first participant vehicles; determines to execute the computational task on the first TVVS based on the processing resource requirement of the computation task, the available processing resources of the first TVVS at the first timestamp, and the estimated available processing resources of the first TVVS at the second timestamp; and assigns the computational task to the first TVVS to execute the computational task.

### SOME EXAMPLE EMBODIMENTS

Therefore, there is a need for an approach for enabling remote use of a vehicle's computational resources (e.g., vehicle onboard resources) via network connection(s) (e.g., wireless/mobile data connections such as 5G high-band).

The object of the invention is achieved by the subject-matter of the independent claims. Advantageous embodiments are defined in the dependent claims. Further examples are provided for facilitating the understanding of the invention.

In addition, for various example embodiments of the invention, the following is applicable: a method comprising facilitating a processing of and/or processing (1) data and/or (2) information and/or (3) at least one signal, the (1) data and/or (2) information and/or (3) at least one signal based, at least in part, on (or derived at least in part from) any one or any combination of methods (or processes) disclosed in this application as relevant to any embodiment of the invention.

For various example embodiments of the invention, the following is also applicable: a method comprising facilitating access to at least one interface configured to allow access to at least one service, the at least one service configured to perform any one or any combination of network or service provider methods (or processes) disclosed in this application.

For various example embodiments of the invention, the following is also applicable: a method comprising facilitating creating and/or facilitating modifying (1) at least one device user interface element and/or (2) at least one device user interface functionality, the (1) at least one device user interface element and/or (2) at least one device user interface functionality based, at least in part, on data and/or information resulting from one or any combination of methods or processes disclosed in this application as relevant to any embodiment of the invention, and/or at least one signal resulting from one or any combination of methods (or processes) disclosed in this application as relevant to any embodiment of the invention.

For various example embodiments of the invention, the following is also applicable: a method comprising creating and/or modifying (1) at least one device user interface element and/or (2) at least one device user interface functionality, the (1) at least one device user interface element and/or (2) at least one device user interface functionality based at least in part on data and/or information resulting from one or any combination of methods (or processes) disclosed in this application as relevant to any embodiment of the invention, and/or at least one signal resulting from one or any combination of methods (or processes) disclosed in this application as relevant to any embodiment of the invention.

In various example embodiments, the methods (or processes) can be accomplished on the service provider side or on the mobile device side or in any shared way between service provider and mobile device with actions being performed on both sides.

For various example embodiments, the following is applicable: An apparatus comprising means for performing a method of the claims.

Still other aspects, features, and advantages of the invention are readily apparent from the following detailed description, simply by illustrating a number of particular embodiments and implementations, including the best mode contemplated for carrying out the invention. The invention is also capable of other and different embodiments, and its several details can be modified in various obvious respects, all without departing from the scope of the invention. Accordingly, the drawings and description are to be regarded as illustrative in nature, and not as restrictive.

### BRIEF DESCRIPTION OF THE DRAWINGS

The embodiments of the invention are illustrated by way of example, and not by way of limitation, in the figures of the accompanying drawings:
FIG. 1 is a diagram of a system capable of providing mobile cloud computing resources using high-speed data connections, according to example embodiment(s);
FIG. 2A is a diagram illustrating an example journey, according to example embodiment(s);
FIG. 2B is a diagram illustrating an example central processing unit (CPU) utilization schedule for driving, according to example embodiment(s);
FIG. 2C is a diagram illustrating an example processing availability schedule, according to example embodiment(s);
FIG. 3 is a diagram of the components of a mobile processing allocation platform and/or a mobile processing allocation application configured to enable remote use of a vehicle's computational resources via wireless network data connection(s), according to example embodiment(s);
FIG. 4 is a flowchart of a process for enabling remote use of a vehicle's computational resources via wireless network data connection(s), according to example embodiment(s);
FIGs. 5A-5B are diagrams of example user interfaces associated with reserving or managing mobile cloud computing resources, according to example embodiment(s);
FIG. 6 is a diagram of a geographic database, according to example embodiment(s);
FIG. 7 is a diagram of hardware that can be used to implement example embodiment(s);
FIG. 8 is a diagram of a chip set that can be used to implement example embodiment(s); and
FIG. 9 is a diagram of a mobile terminal (e.g., handset or vehicle or part thereof) that can be used to implement example embodiment(s).

### DESCRIPTION OF SOME EMBODIMENTS

Examples of a method, apparatus, and computer program for enabling remote use of a vehicle's computational resources via wireless network data connection(s) are disclosed. In the following description, for the purposes of explanation, numerous specific details are set forth in order to provide a thorough understanding of the embodiments of the invention. It is apparent, however, to one skilled in the art that the embodiments of the invention may be practiced without these specific details or with an equivalent arrangement. In other instances, well-known structures and devices are shown in block diagram form in order to avoid unnecessarily obscuring the embodiments of the invention.

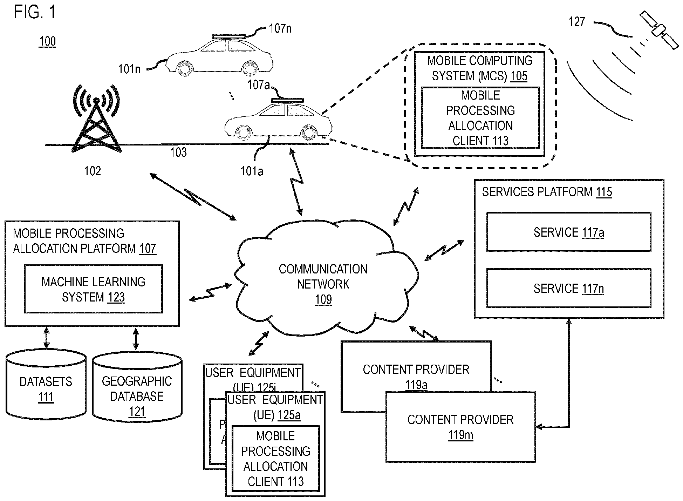

To address these problems, a system 100 of FIG. 1 introduces a capability to enable remote use of a vehicle's computational resources via wireless network data connection(s). The increasing number of connected vehicles represents a challenge for managing available high-speed communication bandwidth as well as an opportunity to utilize the on-board resources of mobile objects (such as vehicles, mobile devices, etc.) as mobile cloud resources to offer cloud computing services, etc. when they are not fully in use for vehicle driving functions. Cloud computing provides on-demand computing system resources, including computing power, data storage (cloud storage), etc., without direct user active management. FIG. 1 is a diagram of a system 100 capable of providing mobile cloud computing resources (e.g., vehicles one-board resources) using high-speed data connections, according to example embodiment(s). Vehicles one-board resources can include hardware, execution environment capabilities, network capabilities, etc. For instance, the hardware may include CPU cores, graphics processing (GPU) Cores, architecture types, RAM, storage capacity, sensors, etc. The execution environment capabilities may include operating systems, virtualization capabilities, supported programming languages, supported neural network definitions, etc. The network capabilities may include network access, bandwidth, etc.

For instance, connected vehicles, particularly autonomous vehicles, are equipped with different autonomous driving systems that support navigation, positioning, an electronic map, map matching, global path planning, environment perception, laser perception, radar perception, visual perception, vehicle control, perception of vehicle speed and direction, etc. By way of example, simultaneous localization and mapping (SLAM) algorithms can fuse data from multiple sensors and an off-line map into current location estimates and map updates, detect and track other moving objects, use roadside real-time locating system (RTLS) technologies to aid localization. Autonomous vehicles require some form of machine vision for visual object recognition, and apply deep neural networks to "learn" how to execute the best course of action under different real-life driving scenarios.

These autonomous driving systems require powerful computing resources, such as GPU-based hardware to enable computer vision applications, dynamic simulations, etc. in a three-dimensional (3D) space. Such hardware also can support various neural networks and other artificial intelligence (AI) architectures, and sometimes is referred to as "supercomputers on wheels." With such hardware, the connected vehicles can estimate their current positions, plan routes through a road network, and predict their future destinations based on previous user/vehicle behaviors. In particular, connected electric vehicles are aware of available charging infrastructure, aware of their current state of charge (SoC), and if they are currently charging.

Dozens of companies have or are developing chips for neural network inference. By way of example, the Drive PX Pegasus^{™} system is based upon two CPU/GPU devices and two other GPUs to support Level 4 and Level 5 autonomous driving, with a total of 320 trillion or tera operations per second (TOPS) of AI computational power and a 500 Watts thermal design power (TDP). The more recent DRIVE Orin^{™} system can deliver up to 254 TOPS.

However, the connected vehicles currently operate their powerful computing hardware for sensor fusion and object recognition (e.g., taking sensor data and making sense out of the sensor data to serve their own missions (e.g., sensing and navigation, self-driving, data exchange to improve safety and traffic flow, etc.) as discussed. In other words, the computing power of the connected vehicles is only available to themselves for their own purposes. On the other hand, infrastructure as a service (IaaS) solutions, such as Amazon Web Services, operate in fixed-location datacenters with constantly-wired network connections. In fog computing approaches, smaller capacities (e.g., an IoT gateway or fog node installed on a bus) can be made available for processing data for a mobile device with a connection. By way of example, a fog server can be deployed inside a bus to provide on-board video streaming, gaming and social networking services to passenger mobile devices using WiFi. In this example, the fog server serves passenger mobile devices with its own missions, but does not offer its processing power for cloud computing, nor facilities for the passenger mobile devices to offer cloud computing services.

In one embodiment, the system 100 can provide mobile computing resources (e.g., connected vehicles 101a-101n (collectively referred to as vehicles 101), mobile devices, etc.) using high-speed connections to provide cloud computing services. The vehicles 101 can be standard vehicles, autonomous vehicles, heavily assisted driving (HAD) vehicles, semi-autonomous vehicles, etc.

On the data processing side, for instance, the connected vehicles 101 have idle computing resources for use when stationary to offer cloud computing services. On the data transmission side, the 5G infrastructure can provide the connected vehicles 101, mobile devices, etc., with fiber-optic-like data speeds (in the Gigabits), especially 5G Millimeter Wave /High Band connections, to receive data for processing and/or to transmit processed data. As such, the system 100 can incorporate mobile cloud resources (e.g., in vehicles, mobile devices, etc.) into the cloud infrastructure which includes hardware, abstracted resources, storage, network resources, etc.

By way of example, a connected vehicle 101a is travelling on a road link 103 covered by a 5G access point 102 (e.g., a 5G cell unit). 5G utilizes 4G (low-band), 2.5-3.7 GHz (mid-band, between 2.4 and 5 GHz Wi-Fi), and 25-39 GHz millimeter wave (high-band). Low and mid band 5G signals have dispersion characteristics that still permit communication when multipath signals are received. On the other hand, high-band 5G requires a more or less direct signal path to achieve Gigabit speeds, as signals in this frequency range do not penetrate objects well and decay quickly when reflected.

In order to effectively utilize the onboard computing power of the vehicle 101a, the system 100 can reliably and quickly transfer to-be-processed data to the vehicle 101a for processing by the on-board resources (e.g., a mobile computing system 105, e.g., the Drive PX Pegasus^{™} system). In one embodiment, the system 100 can retrieve road link attribute data that indicates road link(s) served by 5G high-band signals (e.g., 5G Millimeter Wave map attributes stored in a map database and/or collected by vehicles 101), and determine where and when the vehicle 101a can perform high volume data transmission for a given timeframe (e.g., a data transmission/connectivity schedule). The system 100 can then provide and/or publish the data transmission schedule to a mobile processing allocation service (e.g., a mobile processing allocation platform 107), indicating where and when 5G high-band connections will be available to upload and/or download data to the vehicle 101a. The indications correspond to the times when the vehicle 101a is expected to be within a 5G coverage.

In other embodiments, the mobile processing allocation platform 107 can allocate 5G mid/low speed, 4G, 3G, Wi-Fi, Li-Fi, or other data connections of a communication network 109 to transfer data for processing to the vehicle 101a and/or to transfer processed data from the vehicle 101a (there data for processing and the processed data collectively referred as datasets 111), depending on mobile cloud resource demand of different users, data connection availability of the vehicle 101a, and a processing availability schedule of the vehicle 101a. The mobile processing allocation platform 107 can work in conjunction with a mobile processing allocation client 113 resided in the mobile computing system 105 to process the transferred data in the vehicle 101a.

By way of example, the processing availability schedule of the vehicle 101a can depend on cloud resources of the vehicle 101a (e.g., the mobile computing system 105, sensors, storage, etc.), an operation state of the vehicle 101a (e.g., self-driving, manual driving, stationary, on a charging station, parked, etc.), estimated and/or planned vehicle use by an owner of the vehicle 101a, etc. As another example, the system 100 can aggregate processing availability schedules of the vehicles 101 into a mobile resource marketplace, and manage booking of the resources on the vehicles 100 for different mobile cloud resource users including private and public entities (e.g., companies, government agencies, small businesses, individuals, etc.). For instance, a vehicle owner can be a vehicle original equipment manufacturer (OEM), a fleet operator (e.g., a vehicle rental company, a delivery service, etc.), etc., that owns and/or operates a fleet of vehicles and offers the system 100 the resources of the fleet in bulk. In one embodiment, the vehicles 101 include one or more vehicle sensors such as 5G antenna, location sensors (e.g., GNSS receivers), LiDAR, etc.

To simply the discussion, by way of example, the system 100 can collect the transmission and processing availability schedule data of one vehicle (e.g., the vehicle 101a). For instance, the transmission availability schedule data may include 5G high band link attributes and other connectivity availability link attributes such as 5G mid/low speed, 4G, 3G, Wi-Fi, Li-Fi, etc.) in an availability schedule which indicates at which time periods and locations from a mobility profile of a vehicle it will have different network connectivity.

In another embodiment, the availability schedule can also include information about the available one-board resources, with time periods when the vehicle is or not likely to use its on-board resources (e.g., computing resources) for driving functions. These periods may include when the vehicle being driven in a manual mode, advanced driver-assistance systems (ADAS) disabled, only minimal resources under use, or the vehicle being stationary.

Since most (semi-) autonomous vehicles and autonomous vehicles are electric vehicles, in another embodiment, the system 100 can consider SoC to determine when the vehicle will be available for processing tasks other than driving functions. For instance, the system 100 can use a fixed threshold (e.g., SoC over 50%) or a variable SoC threshold (e.g., based on the next expected charge, the next expected trip, etc.) to determine when the vehicle will be sufficiently charged and available for performing cloud computing and/or other processing. While powering such computing resource hardware (e.g., the mobile computing system 105 of the vehicle 101a) does require considerable amounts of energy, the power required to move the vehicle is several orders of magnitude higher, so that the SoC may still be able to support an acceptable driving range (e.g., 100 to 300 miles per charge) for the vehicle user.

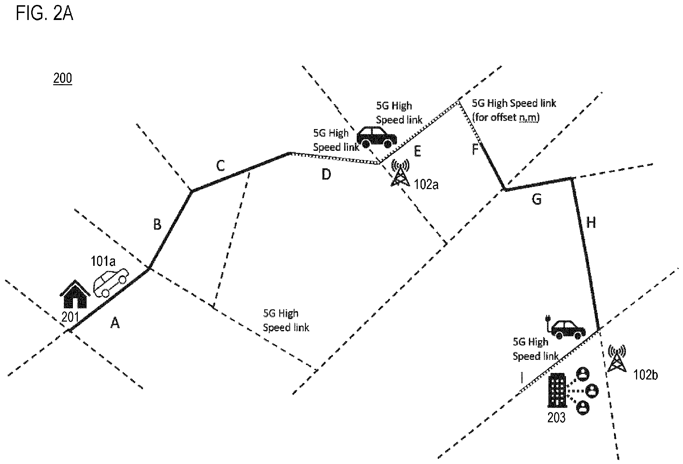

FIG. 2A is a diagram illustrating an example journey 200, according to example embodiment(s). For instance, the availability schedule in Table 1 below corresponds to the example journey 200 including road segments A-I in FIG. 2A. In FIG. 2A, the road segments A, C, G, H offer a slower connectivity (e.g., 4G as marked in solid lines), the road segments D, E, I offer 5G high band connectivity (as marked in dotted lines), while a portion of the road segments F offers 5G high band connectivity. In particular, Segment F offers 5G high band connectivity only for a portion between Offset n and Offset m from a segment node thereof. Depending on the resolution or definition of the map data and the vehicle location data, the offset can be defined as a distance in meters from the last intersection, and/or as precise in centimeters. Other road segments of the road network (not part of the example journey 200 as marked in broken lines) may offer 5G high band and/or other connectivity, or no connectivity.

**Table 1**

| Time Slot | Data Bulk Transmission (5G high band) | Reachable (Slower Network Connection) | Processing Availability | Coarse Location (Region/Country) |
|---|---|---|---|---|
| 00:00-7:30 | No | Yes | Yes | DE |
| 7:31-7:49 | No | Yes | No | DE |
| 7:50-7:55 | Yes | Yes | No | DE |
| 7:56-8:10 | No | Yes | No | DE |
| 8:10-16:30 | Yes | Yes | Yes | DE |

For instance, during the time slot of 00:00-7:30, the vehicle 101a has been parked (thus colored white with a black outline) outside a user's home 201 along segment A, thus available for cloud computing. However, due to lack of a high-speed connection, the vehicle 101a does not offer bulk data transfer, but can process tasks previously transferred for processing. The vehicle 101a can also be reached via a slower network connection for status querying, monitoring, etc. of the tasks previously transferred.

During the time slot of 7:31-7:49, the vehicle 101a can start the journey (thus colored black) to the user's office 203 via segments A, B, C. Since there is no 5G high band connectivity for these segments, the system 100 can disable the bulk data transmission to/from the vehicle 101a substantially during time(s) when the vehicle 101a is or is expected to travel through these segments (e.g., during the time slot of 7:31-7:49). The vehicle 101a can still offer a lower speed connectivity during these segments. In the example, the vehicle 101a is using its processing power for driving (such as semi-autonomous driving, autonomous driving, passive hazard monitoring, etc.), making its processing power unavailable for cloud computing during this time slot. Alternatively, the vehicle 101a can deny any connectivity for cloud computing, in order to prioritize bandwidth use for the vehicle 101a and/or the user. These are also applicable to the time slot of 7:56-8:10 when the vehicle 101a drive via a portion of segment F and segments G, H.

During the time slot of 7:50-7:55, the vehicle 101a has 5G high band connectivity (e.g., via a 5G access point 102a) and can accept bulk data transmissions when travelling on via segments D, E, and the other portion of segment F. As above, the vehicle 101a is using its processing power for driving and prioritize bandwidth use for the vehicle 101a and/or the user.

During the time slot of 8:10-16:30, the vehicle 101a is parked on a 5G high band available road segment I (e.g., via a 5G access point 102b), by the user's office 203. The vehicle 101a can make available both bulk data transmissions and processing resources for cloud computing. For instance, the system 100 can make the processing resources available for cloud computing based on a state of charge (SoC) of the vehicle 101a. For example, the processing power of the vehicle 101a is made available when the vehicle 101a reaches a threshold charging level. As another instance, when the vehicle 101a is connected to a power grid for recharging, the system 100 can make the processing resources of the vehicle 101a available regardless of the SoC.

In one embodiment, the coarse location information (e.g., DE for Germany) in Table 1 may provide a rough indication of the location of the vehicle 101a, to comply with vehicle user and/or owner's privacy settings, economic and legal restrictions to transmitting data outside a country or region, etc.

The availability schedule of Table 1 based on FIG. 2A can be based on an estimated or planned journey. The availability schedule can be offered with a respective probability of being accurate. In another embodiment, the vehicle 101a can report and/or update to the system 100 its availability schedule in real-time for the respective resource capacities, that in turn triggers cloud computing user(s) to start data transmissions. In one embodiment, the data can be transferred directly to the vehicle 101a to save time and network bandwidth. In one embodiment, the data can be transferred via the system 100 then the vehicle 101a, such that the system 100 can provide authentication of the mobile cloud computing participants as well as preserve privacy of the mobile cloud computing participants. The system 100 can monitor processing progress at the vehicle 101a and provide the processing progress information to the cloud computing user(s) periodically, on demand, etc.

In another embodiments, the system 100 can allocate resources to support other services than cloud computing from the vehicle 101a in response to request(s) by nearby vehicle(s) and/or user device(s). For instance, another vehicle and/or user device outside of the vehicle 101a can request the system 100 to allocate nearby bandwidth resource, such as a network connection (e.g., 5G high band) of the vehicle 101a, to receive data (e.g., movies) on its behalf and/or to provide internet access. The 5G-enabled vehicle 101a then can transmit the movies and/or provide internet access to the other vehicle and/or user device (that is not 5G-enabled) via a V2V connection or a V2X connection.

As another instance, the system 100 can allocate resources of the vehicle 101a to support location-based services in response to remote user request(s). For example, the system 100 can allocate sensors of the vehicle 101a (e.g., an autonomous vehicle) to take images, measure parking spots, count pedestrians, count other vehicles, or other actions specifically requested by a remote user, outside of the driving routine of the vehicle 101a. In some cases, the system 100 may send additional program(s) to the vehicle 101a in order to execute the specifically requested actions. Such actions can be location-sensitive, e.g., the vehicle 101a needs to be at a certain location to perform the specifically requested actions. By way of example, a remote user requests a people/vehicle traffic survey at an intersection A, so the system 100 can retrieve/collect the mobility data of the vehicle 101a to determine a location-based schedule to add to the availability schedule of Table 1. With such location-based schedule, the system 100 can determine when (one or more time periods) the vehicle 101a can be available near the intersection A to survey how many people/vehicle pass by or via intersection A. As another example, a construction company may rent sensors of the vehicle 101a for a time frame (e.g., one month), to detect noise pollution, air quality, etc. of a neighborhood around a construction site.

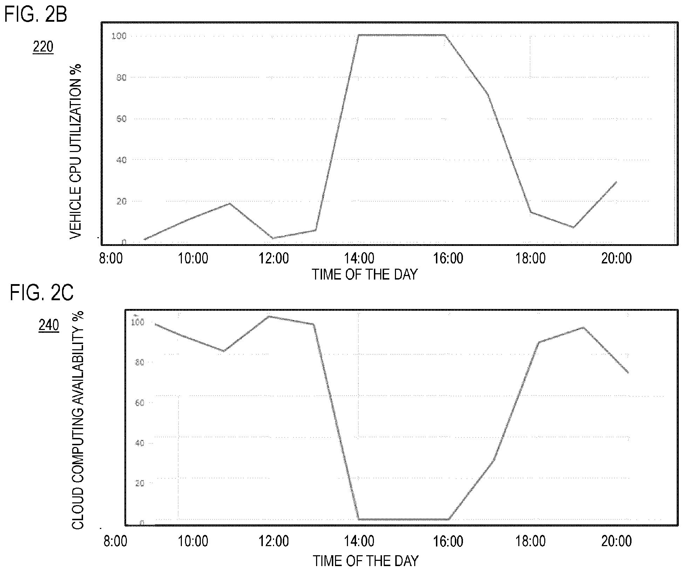

As mentioned, the vehicles one-board resources can include hardware, execution environment capabilities, network capabilities, etc. In one embodiment, the system 100 can invite vehicle/fleet owners to register the on-board resources on a platform by just entering the model, year, upgrades, etc., then the system 100 can retrieve detailed specification from vehicle OEM, maintenance records, insurance records, accident records, etc. associated with the vehicle/fleet, to generate processing schedule data as shown in FIG. 2B, for example, using machine learning (ML). For more advanced vehicle models, the system 100 can query a mobile computing system (e.g., the mobile computing system 105 of the vehicle 101a) for hardware, execution environment, and/or network capabilities of the vehicle processing resources. For instance, the hardware capability attributes may include numbers of CPU cores / GPU Cores, architecture type, RAM, storage capacity, etc. The execution environment attributes may include operating system, virtualization capabilities, supported programming languages, supported neural network definitions, etc. The network attributes may include supported network types, connectivity, bandwidth, etc.

FIG. 2B is a diagram illustrating an example CPU utilization schedule 220 for driving, according to example embodiment(s). In this scenario, the vehicle is a shared autonomous vehicle 101n that are busy transporting users via out the day except during lunch time (e.g., 12:00-13:00) and dinner time (e.g., 18:00-19:00). In the scenario, the vehicle 101n is using its processing power for driving most of the time, and making its unused processing power available for cloud computing during other time, especially lunch and dinner time slots. FIG. 2C is a diagram illustrating an example processing availability schedule 240, according to example embodiment(s). The processing availability schedule 240 can be an inverse diagram of the diagram of the CPU utilization schedule 220, since the system 100 and/or the vehicle user/owner sets any residual processing power of the vehicle processing resources (after fulfilling driving functions) can be used for cloud computing. Similar processing availability schedules can be provided for other on-board resources of the vehicles 101a, such as GPU, storage, memory, bandwidth, sensors, etc.

In another embodiment, the system 100 can replace the timeline on the x-axis in FIG. 2C with a mobility pattern of the vehicle 101a for offering location-based remote services as discussed. In yet another embodiment, the mobility pattern of the vehicle 101a can be added on the z-axis for offering location-based remote use services as discussed. In addition, rather than one vehicle, the system 100 can provide processing availability schedules for a fleet of vehicles by aggregating their processing availability schedule data.

In another embodiment, the system 100 can invite vehicle/fleet owners to register the on-board resources on the mobile processing allocation service ("Processing Marketplace", provided by the mobile processing allocation platform 107) by just entering the model, year, upgrades, and/or detailed specification. For instance, the system 100 can retrieve the vehicle data from a database, for example, just model and year being sufficient to know the capacity of its processing unit(s). In addition, a vehicle/fleet owner or user can manually define processing availability windows (e.g., when and/or where the vehicle/fleet is allowed to perform processing exceptions for road trips, emergencies, etc.).

In one embodiment, the vehicle 101a can use its sensors to track its parking times and locations along the road network. Further, the vehicle 101a can track of its usual routes and assembles a mobility profile (akin with concepts, such as a mobility graph). With the parking and mobility information, the vehicle 101a and/or the system 100 can predict or estimate vehicle locations in the road network. The vehicle 101a and/or the system 100 can further increase the quality of the prediction or estimation by incorporating route guidance information such as a calculated route that is about to be traversed. The mobility profile contains time periods and locations/road links where/when the vehicle traveled on and are likely to travel on, as well as time periods and locations/road links where/when the vehicle parked on and are likely to park on. Further adjustments can be made e.g., traffic and/or traffic forecast. In another embodiment, the mobility profile may further include information of available computing resources for predicting resource availability with respect to locations. In another embodiment, the mobility profile can be reduced to derive when processing/transmission resources will be available, without disclosing a precise location of the vehicle.

In one embodiment, the mobile processing allocation platform 107 has connectivity over the communications network 109 to a services platform 115 (e.g., an OEM platform) that provides one or more services 117a-117n, one or more content providers 119a-119m, etc., and allocate mobile resources (e.g., of vehicles 101) in response to requests therefrom. By way of example, the services 117 may also be third-party services such as mapping services, navigation services, traffic incident services, travel planning services, notification services, social networking services, content (e.g., audio, video, images, etc.) provisioning services, application services, storage services, contextual information determination services, location-based services, information-based services (e.g., weather, news, etc.), etc. In one embodiment, the services platform 115 uses the allocated mobile resources to provide services such as navigation, mapping, other location-based services, etc.

Computing hardware for (semi-)autonomous vehicles has advantages for artificial intelligence/machine learning applications. The sheer number of GPU cores make these devices ideal for machine learning/ neural network training and detection tasks. By way of example, the mobile processing allocation service can be oriented to accept machine learning payloads, reserving 5G high band connectivity timeslots for obtaining training data, and providing the trained models (usually far more compact than the training data) at times when 5G or lower speed connections are available.

In one embodiment, a mobile resource requesting user can search for mobile processing resources at the mobile processing allocation service (i.e., "Processing Marketplace"), from one or more user equipment (UE) 125a-125i (also collectively referenced to herein as UEs 125). Through the Processing Marketplace, the requesting user can query for available resources that match the user's processing needs. For example, the requesting user may query for a 4-core processor, 100 GB/s of memory bandwidth, deep learning accelerators up to 2 TOPS, GPUs up to 100 TOPS, and a Drive OS operating system to be booked for e.g., 8 hours of processing time. The system 100 can identify a vehicle or a group of vehicles that can provide the required processing resources (e.g., a vehicle equipped with DRIVE AGX Pegasus) available for timeslots X and Z for transmission and a timeslot Y for processing, and make an offer of the processing resources to the requesting user. The group of vehicles can be a set of vehicles registered to the Processing Marketplace, whether they belong to a fleet or not, as long as they can coordinate processing using their resources, such as transferring from one vehicle to the next when one of the group of vehicles requires its processing power for driving tasks.

Once the requesting user accepts the offer, the system 100 can reserve the capacity at the chosen vehicle/fleet (e.g., the vehicle 101a). After the allocation of mobile resources to the requesting user, the system 100 can send the data for processing to the vehicle 101a (and/or a fleet of vehicles) based on the transmission schedule(s) of network connection(s).

In one embodiment, the system 100 can establish a direct data connection between a UE 125 associated with the requesting user and the vehicle 101a, leaving transmission management to the UE 125. In another embodiment, the system 100 can receive a data payload for processing from a UE 125 associated with the requesting user, and forward the data payload to the vehicle 101a once a transmission window (e.g., listed in Table 1) is confirmed by the vehicle 101a.

In yet another (more flexible) embodiment, the system 100 can manage and booked the vehicles capabilities in the background, and provide a requesting user with an interface to book processing time according to the booked vehicle capacities. In addition, the system 100 can provide an estimated delivery time. The delivery time may exceed the booked vehicle processing time, since the system 100 may need to pause the processing at one vehicle and send the data and the processing to another vehicle for continuing processing. In the background, the system 100 can manage the availability schedule of a vehicle/fleet, deliver the data payload to an available vehicle for at least partial processing, then receive the intermediate or final data payload from the vehicle. When the first vehicle either rans out of the processing window as scheduled or is interrupted (e.g. switching into an autonomous driving mode), the system 100 can find the next available vehicle corresponding to the requested processing characteristics and forward the partially processed data payload there. In other words, when a vehicle becomes either in use/driving or unreachable, the under-processing data payload may be in transit between vehicles, which is acceptable for batch processing rather than live processing.

When the processing is finished, the system 100 can notify the requesting user, deliver the processed data payload to the requesting user, and/or credit the participants accordingly (e.g., applying payment from the requesting user to the owner of the vehicle).

In one embodiment, the system 100 can motivate vehicle buyers to purchase more capable vehicles with the aim of monetizing the capabilities later on the mobile processing allocation service ("Processing Marketplace"), e.g., cash-back. In another embodiment, the system 100 can motivate vehicle users to offer the on-board resources when the vehicles are parked/stationary (e.g., hooked on a charging stations), with parking/charging discounts.

In one embodiment, where mobile cloud computing (e.g., vehicle-based IaaS processing) is unavailable, the system 100 can default to fixed datacenters. In another embodiment, the requested applications can be downloaded and executed directly on the vehicle's operating system. However, this approach increases complexity and security issues for both the requesting user and the vehicle.

Alternatively, mobile IaaS processing may require environment variables to be set up that are unpractical or unsafe for the vehicles to accept directly. In this case, the system 100 can set data payloads in virtual machines (VMs) or finer grain application containers (such as Kubernetes or Docker containers). Provided the mobile computing systems of the vehicles can run such virtual machines or containers, the code in requested applications can run, be paused, be resumed and ended in the VMs/containers, while providing isolation for the rest of resources on the vehicles.

Once the vehicle 101a confirms a task, it can allow for reception of the data payload, initiate processing/execution of the data payload, pause the processing (if required), and upload the processed payload. Further, the vehicle's implementation may enable safeguards to ensure that the data payload does not interfere with other systems of the vehicle 101a (e.g., immobilize the vehicle 101a until the payload processing has finished). Depending on data security permissions, the vehicle 101a may also allow for connection to the executing payload when a "Processing Available" flag and a "Reachability" flag are enabled. This may allow the requesting user to query the status of the payload execution. The system 100 can set a "Minimal Processing Available" flag, which disallow processing of heavy execution tasks (as e.g., ML), but allows for queries on the processing status. In case of an autonomous vehicle, when there is no 5G high band connectivity detected yet the vehicle 101a has advertised itself as available for bulk data transmission, the vehicle 101a can autonomously move to a known location with 5G high band connectivity (as indicated in a 5G high band map attribute). Such maneuver can take place when the vehicle 101a expects that the vehicle user will not use the vehicle 101a for some time, at least for the length of data transmission and the journey from/to a parking spot.

Therefore, the system 100 can publishing a transmission and processing schedule, match remote processing demands and supplies, and then schedule transmission/processing of data payload(s) for remote uses onto mobile resources (such as on-board resources of vehicle(s)). As such, the system 100 can assist remote users to book computational resources in accordance with the published schedule, and compensate remote resource owners accordingly. On the other hand, users in search of computational resources can take advantage of remote resources for AI-related applications, etc. Moreover, the system 100 can provide features such as (i) user interfaces that may enable a user to find computational resources according to published schedules, (ii) optimization/matching of various user remote use requests with respect to the published schedules of various vehicles/fleet, (iii) other technical features to enable monetization for mobile resource owners, etc.

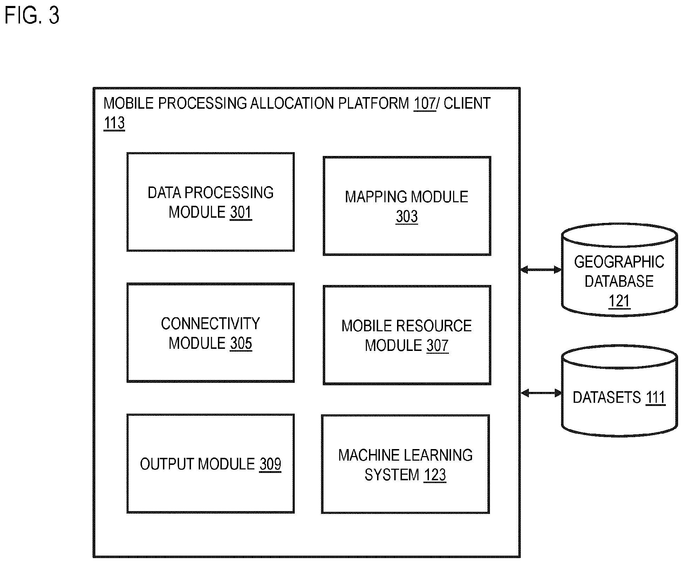

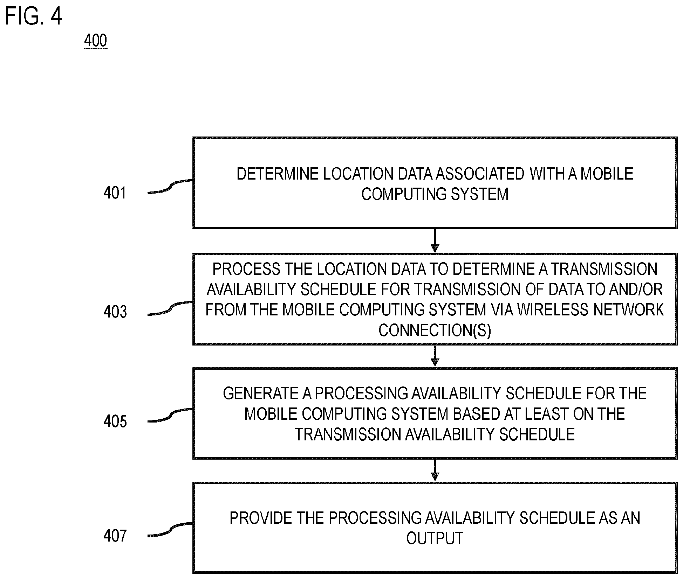

FIG. 3 is a diagram of the components of a mobile processing allocation platform and/or a mobile processing allocation application configured to enable remote use of a vehicle's computational resources via wireless network data connection(s), according to example embodiment(s). By way of example, the mobile processing allocation platform 107 and/or the mobile processing allocation client 113 includes one or more components for enabling remote use of a vehicle's computational resources via wireless network data connection(s), according to the various embodiments described herein. It is contemplated that the functions of these components may be combined or performed by other components of equivalent functionality. In one embodiment, the mobile processing allocation platform 107 includes a data processing module 301, a mapping module 303, a connectivity module 305, a mobile resource module 307, an output module 309, and a machine learning system 123, and has connectivity to the UEs 125 and/or a geographic database 121. The above presented modules and components of the mobile processing allocation platform 107 can be implemented in hardware, firmware, software, or a combination thereof. Though depicted as a separate entity in FIG. 1, it is contemplated that the mobile processing allocation platform 107 may be implemented as a module of any other component of the system 100. In another embodiment, the mobile processing allocation platform 107 and/or the modules 301-309 may be implemented as a cloud-based service, local service, native application, or combination thereof. The functions of the mobile processing allocation platform 107, the machine learning system 123, the UEs 125, and/or the modules 301-309 are discussed with respect to FIGs. 4-5.

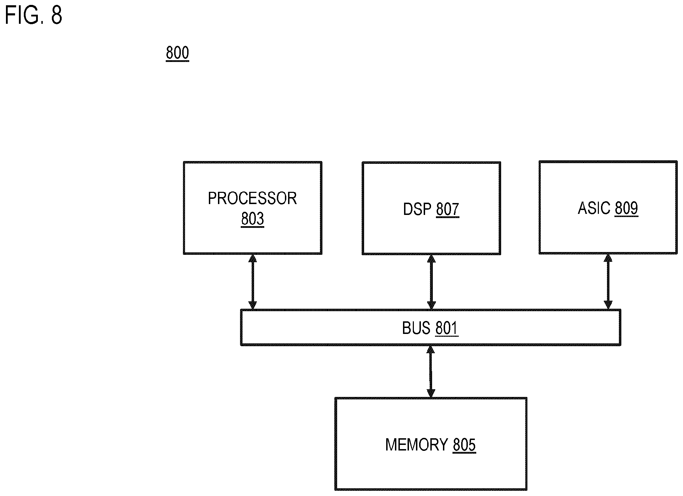

FIG. 4 is a flowchart of a process for enabling remote use of a vehicle's computational resources via wireless network data connection(s), according to example embodiment(s). In various embodiments, the mobile processing allocation platform 107, the mobile processing allocation client 113, the machine learning system 123, and/or any of the modules 301-309 may perform one or more portions of the process 400 and may be implemented in, for instance, a chip set including a processor and a memory as shown in FIG. 8. As such, the mobile processing allocation platform 107, the machine learning system 123, and/or the modules 301-309 can provide means for accomplishing various parts of the process 400, as well as means for accomplishing embodiments of other processes described herein in conjunction with other components of the system 100. Although the process 400 is illustrated and described as a sequence of steps, its contemplated that various embodiments of the process 400 may be performed in any order or combination and need not include all the illustrated steps.

In one embodiment, for example, in step 401, the mapping module 303 can determine location data associated with a mobile computing system (e.g., the mobile computing system 105 of the vehicle 101a), e.g., via location sensor data and/or probe data of the vehicle 101a. For instance, the mapping module 303 can determined expected location(s) of the vehicle 101a according to a planned route (e.g., the journey 200 in FIG. 2A), mobility data, etc. of the vehicle 101a. Using map-matching techniques, the mapping module 303 can identify the road segments of the journey 200 in FIG. 2A.

In one embodiment, the data processing module 301 can retrieve map data (e.g., wireless network coverage area maps and/or road-link map attributes from one or more mapping services, map databases, the geographic database 121, etc.) including 5G signal data detected by the vehicles 101 when travelling in an area and/or on road links, which are individual data records collected at a point in time when the vehicles 101 travelling on the road links. For instance, the map data can be downloaded (e.g., from a map database) and/or stored in, for example, a navigation device of the vehicle 101a.

In step 403, the connectivity module 305 can process the location data (e.g., against the wireless network coverage area maps, the road-link map attributes, etc. which show where e.g. 5G and other data connections is available) to determine a transmission availability schedule (e.g., Columns 1-2 of Table 1 as traveling on the journey in FIG. 2A) for transmission of data to and/or from the mobile computing system via one or more wireless network connections (e.g., 5G high band).

For instance, the one or more wireless network connections can satisfy one or more threshold criteria including a minimum network bandwidth, a minimum network latency, or a combination thereof for transmitting remote data to be processed by the computational resource during the remote use, receiving data processed by the computational resource, or a combination thereof.

By way of example, the mobile computing system can be equipped in a vehicle (e.g., the vehicle 101a), and the location data includes one or more estimated or planned future locations of the vehicle. The mobile computing system can be used for an operation of the vehicle, and the mobile resource module 307 can determine that the computational resource is available based on a threshold level of use of the computational resource (e.g., for the operation of the vehicle).

In one embodiment, the data processing module 301 can retrieve mobile resource data (e.g., from one or more OEM services, etc.) including resource data of the vehicles 101 (e.g., CPU/GPU, storage, memory, bandwidth, sensors, etc.). In step 405, the mobile resource module 307 can generate a processing availability schedule (e.g., Columns 1 & 4 of Table 1) for the mobile computing system based at least on the transmission availability schedule. The processing availability schedule can indicate when a computational resource (e.g., CPU, GPU, etc.) of the mobile computing system is available for a remote use (e.g., cloud computing, specifically requested location-based actions, etc.) that is initiated over the one or more wireless network connections (e.g., 5G high band). For instance, the remote use (e.g., to support AI-powered predictions/applications such as traffic, ride-sharing, disease control, spam filtering, smart email categorization, fraud prevention, plagiarism checking, AR/VR, gaming, etc.) may require continuous wireless network connections. As another instance, the remote use (e.g., processing weather analysis) may require a periodical wireless network connection. As yet another instance, the remote use (e.g., processing urban housing and development analysis) only requires one or more wireless network connections for transmitting the processed data. For instance, the urban housing and development analysis may require object detection in images and/or point-clouds, pattern finding in data, natural language processing model training, etc. that can be processed using vehicle's computational resources via wireless/mobile data connections. Most applications of supervised or unsupervised machine learning can run by the system 100 and return derived models at the end. In another embodiment, the processing availability schedule further indicates a type of the one or more wireless network connections that is available during one or more available time slots.

As another instance, the mobile resource module 307 can determine the processing availability schedule further based on determining where and when the mobile computing system is estimated or planned to be stationary in an area, or to move with the computational resource operating under a threshold level of use (e.g., while the one or more wireless network connections satisfies the threshold criteria). In one embodiment, the computational resource can be configured for a machine learning application associated with the remote use. In one embodiment, the mobile resource module 307 can implement AI and machine learning to determine the availability schedule data for all kinds/types of mobile resources.

In one embodiment, the mobile processing allocation platform 107 may ingest mobile resource availability data, mobile resource consumption information (e.g., historical mobile resource rental information), etc., stored in a database for processing by a machine learning system 123 using a machine learning model to predict future mobile resource availability and rental data. The machine learning system 123 may use predictive analytics to process structured and unstructured information stored in the database to optimize the predictive power. Predictive analytics integrates various techniques from data mining, statistics, modeling, machine learning, and AI to process and analyze various data sets for the purpose of developing predictions. Thereafter, machine learning system 123 may customize mobile resource recommendations for different users based on the prediction and present relevant offers to the users. For example, when a new vehicle owner register with the mobile processing allocation service, the machine learning system 123 can analyze past mobile resource availability data of same model, year, use, etc. to generate a availability schedule for the vehicle. As another example, when a new mobile resource user is getting started with the mobile processing allocation service, the machine learning system 123 can analyze past resource rental data (including traditional cloud and/or mobile cloud resources) to recommend an optimal vehicle/fleet/package for the requesting user. The vehicle/fleet/package may be completely different for different requesting users. In one example embodiment, the machine learning system 123, in real-time, can monitor and/or survey processing status for different users, to collect training data to train the machine learning model.

In one embodiment, the mobile resource module 307 can track a time duration, a level of use, or a combination thereof of the remote use, or of the computational resource. The mobile resource module 307 can then compute a monetization value based on the time duration, the level of use, or a combination thereof. For instance, the monetization value can be billed per-second, per-minute, per 10-minute, per-hour, etc. based on the actual processing by a GPU. As another instance, the monetization value can be estimated by a cost calculator per batch processing before the processing by the GPU.

In one embodiment, the mobile resource module 307 can implement blockchain technology to locate mobile resource service participant accounts, record respective supplies, demands, consumption/usages, payments, receipts for the participants. For instance, the mobile resource module 307 can record a proof of work on a blockchain after completion of the remote use of the computational resource.

In general terms, a blockchain can be an immutable cryptographically linked list of data blocks called a ledger and maintained within a distributed peer-to-peer framework such as a consortium network with nodes. These nodes, for instance, each maintains an identical copy of the ledger by appending transactions that have been validated by a consensus protocol, grouped into blocks. Each block generally contains a cryptographic hash of previous block, a timestamp and transaction data (e.g., generally represented as a Merkle tree). The concept of blockchain does not require a trusted authority or central server as all nodes in the network are equal and act as transaction initiators and validators at the same time, thereby providing full visibility of the blockchain (e.g., the trust chain for consent transactions) across all nodes. All blocks that are added to the blockchain are unalterable and changing any of them retroactively would require alteration of all subsequent blocks which in turn requires consensus of network majority.

In a permissionless blockchain, virtually anyone can participate, and every participant is anonymous. In such a context, there can be no trust other than that the state of the blockchain, prior to a certain depth, is immutable. In order to mitigate this absence of trust, permissionless blockchains typically employ a "mined" native cryptocurrency or transaction fees to provide economic incentive to offset the costs of participating in a form of byzantine fault tolerant (BFT) consensus based on "proof of work" (PoW) or "prove of stake" (PoS) algorithm.

In another embodiment, the mobile computing system can be part of a fleet of a plurality of mobile computing systems, and the processing availability schedule can be generated for the fleet. The mobile resource module 307 can monitor data processing loads of the plurality of mobile computing systems, relocate data to be processed to one or more of the plurality of mobile computing systems based on the data processing loads, and update the processing availability schedule based on the relocating.

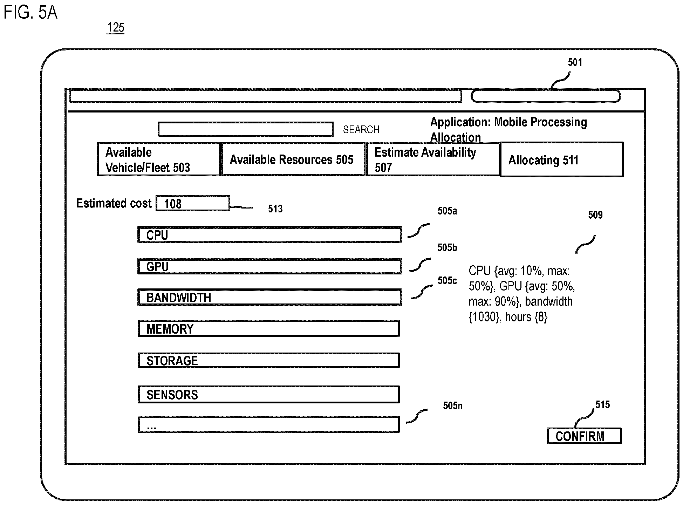

In one embodiment, in step 407, the output module 309 can provide (e.g., publish the processing availability schedule (e.g., Table 1) as an output (e.g., at the Processing Marketplace). In another embodiment, the output module 309 can present a user interface (e.g., FIG. 5A) on a device based on the processing availability schedule. For instance, the user interface can provide function(s) or other interface features to search/identify available computational resource(s) (e.g., CPUs, GPUs, etc.) and/or to reserve the computational resource for the remote use (e.g., an AI-powered application). In one embodiment, the data processing module 301 can then receive an input via the user interface (e.g., FIG. 5A) indicating a computational requirement (e.g., 10 TOPS for 15 minutes) associated with the remote use (e.g., an online chase game). In this case, the computational resource can be determined to be available further based on the computational requirement. FIGs. 5A-5B are diagrams of example user interfaces associated with reserving or managing mobile cloud computing resources, according to example embodiment(s).

FIG. 5A is a diagram of an example user interface for reserving and/or recommending mobile resources, according to various embodiments. For example, in the user interface (UI) 501 of a UE 125 of FIG. 5A, the user selects "Mobile Processing Allocation" in an application block, inputs a task of interest (e.g., an AI-powered fraud prevention application), and then clicks an "Available Vehicle/Fleet" button 503. The system 100 will recommend a vehicle/fleet (e.g., the vehicle 101a) based on the task. After the user clicks an "Available Resources" button 505, the system 100 can highlight resources of the vehicle/fleet, such as CPU 505a, Memory 505b, and Bandwidth 505c in a resource list.

Alternatively and/or concurrently, the user can click an "Estimate Availability" button 507, the system 100 can estimate the respective resource availability percentage for the vehicle/fleet and/or resources, and display the estimated results in a box 509 as follows: CPU {avg: 10%, max: 50%}, GPU {avg: 50%, max: 90%}, bandwidth {1030}, and hours {8}.

After the user clicks an "Allocating" button 511, the system 100 can estimate the cost of using the allocated vehicle/fleet and/or resource(s) on the vehicle/fleet, and display the estimated cost in a box 513. After the user clicks a "Confirm" button 515, the system 100 can proceed with sending a data payload of the request user to the allocated vehicle/fleet and/or resource(s).

When the vehicle 101a either rans out of the processing window as scheduled or is otherwise interrupted, e.g., by an accident, the system 100 can find the next available vehicle corresponding to the requested processing characteristics and forward the partially processed data payload there. In another embodiment, the system 100 can recommend another vehicle to optimize the mobile processing on the fly when the other vehicle becomes available.

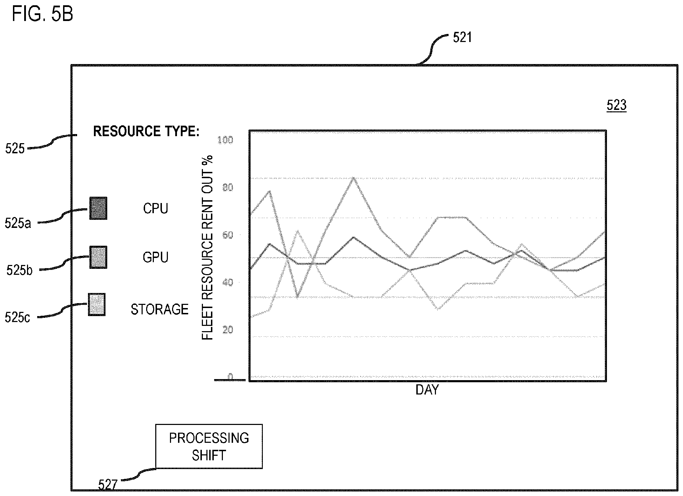

Referring to FIG. 5B, in one embodiment, the system 100 can generate a user interface (UI) 521 (e.g., a browser via the mobile processing allocation platform 107) for a UE 125 (e.g., a mobile device, a smartphone, a client terminal, etc.) that can allow a user (e.g., a vehicle owner, a mobile processing allocation service staff, a vehicle fleet operator staff, an OEM, etc.) to see vehicle resource rent-out data, quality of service measurement data, etc. currently and/or over time (e.g., an hour, a day, a week, a month, a year, etc.) in a chart 523. Upon selection of one or more of the resource types 525 (e.g., CPU 525a, GPU 525b, storage 525c, etc.), the user can access the data based on the respective option(s). In addition, the user can select a "Processing Shift" button 527 to shift processing task(s) to the next available vehicle(s). as discussed. When the processing task(s) to be shifted can be handled in parallel, the processing task(s) can be shifted to multiple vehicles.

For example, the user interface can present the UIs and/or a physical controller such as but not limited to an interface that enables voice commands, a pressure sensor on a screen or window whose intensity reflects the movement of time, an interface that enables gestures/touch interaction, a knob, a joystick, a rollerball or trackball-based interface, or other sensors. As other examples, the sensors can be any type of sensor that can detect a user's gaze, heartrate, sweat rate or perspiration level, eye movement, body movement, or combination thereof, in order to determine a user response to make and/or confirm selections, such as "Processing Shift." As such, the system 100 can enable a user to confirm the mobile resource selection as discussed.

The above-described embodiments can be applied to resources on a vehicle/fleet to provide a mobile resource infrastructure otherwise idle, especially certain hardware ideal for deep learning tasks.

The above-described embodiments provide high level of data security and trust among requesting users and vehicle/fleet owners via authentication, when facilitating the mobile resource services (e.g., mobile cloud computing).

Returning to FIG. 1, in one embodiment, the mobile processing allocation platform 107 performs the process for enabling remote use of a vehicle's computational resources via wireless network data connection(s) as discussed with respect to the various embodiments described herein. As mentioned above, the vehicles 101, for instance, can be a part of a sensor-based system for collecting sensor data for detecting wireless network coverage areas in a road network and/or road link attributes (including 5G signal availability attributes) on a road link. In particular, each vehicle 101 is configured to report sensor data as wireless network coverage areas and/or road-link map attributes (e.g., including a road link ID, offsets, etc. which are individual data records collected at a point in time that records 5G signal data for that point in time). The attributes can also be any attribute normally collected by an on-board diagnostic (OBD) system of the vehicle 101, and available through an interface to the OBD system (e.g., OBD II interface or other similar interface).

In one embodiment, the mobile processing allocation platform 107 may be a platform with multiple interconnected components. The mobile processing allocation platform 107 may include multiple servers, intelligent networking devices, computing devices, components, and corresponding software for providing parametric representations of lane lines. In addition, it is noted that the mobile processing allocation platform 107 may be a separate entity of the system 100, a part of the services platform 115, a part of the one or more services 117, or included within a vehicle 101 (e.g., an embedded navigation system).

In one embodiment, content providers 119 may provide content or data (e.g., including sensor data (e.g., including 5G signal data), road closure reports, probe data, expected vehicle volume data, etc.) to the mobile processing allocation platform 107, the UEs 125, the application/client 113, the services platform 115, the services 117, the geographic database 121, and the vehicles 101. The content provided may be any type of content, such as map content, textual content, audio content, video content, image content, etc. In one embodiment, the content providers 119 may provide content regarding the expected frequency of vehicles 101 on the digital map or link as well as content that may aid in localizing a vehicle path or trajectory on a digital map or link (e.g., to assist with determining actual vehicle volumes on a road network). In one embodiment, the content providers 119 may also store content associated with the mobile processing allocation platform 107, the services platform 115, the services 117, the geographic database 121, and/or the vehicles 101. In another embodiment, the content providers 119 may manage access to a central repository of data, and offer a consistent, standard interface to data, such as a repository of the geographic database 121.

By way of example, the UEs 125 are any type of embedded system, mobile terminal, fixed terminal, or portable terminal including a built-in navigation system, a personal navigation device, mobile handset, station, unit, device, multimedia computer, multimedia tablet, Internet node, communicator, desktop computer, laptop computer, notebook computer, netbook computer, tablet computer, personal communication system (PCS) device, personal digital assistants (PDAs), audio/video player, digital camera/camcorder, positioning device, fitness device, television receiver, radio broadcast receiver, electronic book device, game device, or any combination thereof, including the accessories and peripherals of these devices, or any combination thereof. It is also contemplated that a UE 125 can support any type of interface to the user (such as "wearable" circuitry, etc.). In one embodiment, a UE 125 may be associated with a vehicle 101 (e.g., a mobile device) or be a component part of the vehicle 101 (e.g., an embedded navigation system). In one embodiment, the UEs 125 may include the mobile processing allocation platform 107 to enable remote use of a vehicle's computational resources via wireless network data connection(s).

In one embodiment, the vehicles 101 are configured with various sensors for generating or collecting sensor data, probe data, related geographic/map data, etc. In one embodiment, the sensed data represents sensor data associated with a geographic location or coordinates at which the sensor data was collected (e.g., a latitude and longitude pair). In one embodiment, the sensor data includes location data collected by one or more vehicle sensors. By way of example, the vehicle sensors may include a RADAR system, a LiDAR system, global positioning sensor for gathering location data (e.g., GPS), a network detection sensor for detecting wireless signals or receivers for different short-range communications (e.g., Bluetooth, Wi-Fi, Li-Fi, near field communication (NFC) etc.), temporal information sensors, a camera/imaging sensor for gathering image data, an audio recorder for gathering audio data, velocity sensors mounted on a steering wheel of the vehicles 101, switch sensors for determining whether one or more vehicle switches are engaged, and the like. Though depicted as automobiles, it is contemplated the vehicles 101 can be any type of vehicle manned or unmanned (e.g., cars, trucks, buses, vans, motorcycles, scooters, drones, etc.) that travels through road segments of a road network.

Other examples of sensors of a vehicle 101 may include light sensors, orientation sensors augmented with height sensors and acceleration sensor (e.g., an accelerometer can measure acceleration and can be used to determine orientation of the vehicle), tilt sensors to detect the degree of incline or decline of a vehicle 101 along a path of travel, moisture sensors, pressure sensors, etc. In a further example embodiment, vehicle sensors about the perimeter of a vehicle 101 may detect the relative distance of the vehicle 101 from a physical divider, a lane line of a link or roadway, the presence of other vehicles, pedestrians, traffic lights, potholes and any other objects, or a combination thereof. In one scenario, the vehicle sensors may detect weather data, traffic information, or a combination thereof. In one embodiment, a vehicle 101 may include GPS or other satellite-based receivers to obtain geographic coordinates from satellites 127 for determining current location and time. Further, the location can be determined by visual odometry, triangulation systems such as A-GPS, Cell of Origin, or other location extrapolation technologies.

In one embodiment, the UEs 125 may also be configured with various sensors (not shown for illustrative convenience) for acquiring and/or generating sensor data and/or probe data associated with a vehicle 101, a driver, a passenger, other vehicles, conditions regarding the driving environment or roadway, etc. For example, such sensors may be used as GPS receivers for interacting with the one or more satellites 127 to determine and track the current speed, position, and location of a vehicle 101 travelling along a link or road segment. In addition, the sensors may gather tilt data (e.g., a degree of incline or decline of the vehicle during travel), motion data, light data, sound data, image data, weather data, temporal data and other data associated with the vehicles 101 and/or UEs 125. Still further, the sensors may detect local or transient network and/or wireless signals, such as those transmitted by nearby devices during navigation of a vehicle along a roadway (Li-Fi, near field communication (NFC)) etc.

It is noted therefore that the above described data may be transmitted via the communication network 109 as data payloads according to other known wireless communication protocols. For example, each UE 125, application/client 113, user, and/or vehicle 101 may be assigned a unique resource identifier (URI) for use in transmitting the data payloads to the vehicles 101 for processing and/or transmitting processed data to UEs 125.

In one embodiment, the communication network 109 of the system 100 includes one or more networks such as a data network, a wireless network, a telephony network, or any combination thereof. It is contemplated that the data network may be any local area network (LAN), metropolitan area network (MAN), wide area network (WAN), a public data network (e.g., the Internet), short range wireless network, or any other suitable packet-switched network, such as a commercially owned, proprietary packet-switched network, e.g., a proprietary cable or fiber-optic network, and the like, or any combination thereof. In addition, the wireless network may be, for example, a cellular network and may employ various technologies including enhanced data rates for global evolution (EDGE), general packet radio service (GPRS), global system for mobile communications (GSM), Internet protocol multimedia subsystem (IMS), universal mobile telecommunications system (UMTS), etc., as well as any other suitable wireless medium, e.g., worldwide interoperability for microwave access (WiMAX), Long Term Evolution (LTE) networks, 5G / 5G New Radio networks (5G NR), Narrowband Internet-of-Things networks (NB-IoT), code division multiple access (CDMA), wideband code division multiple access (WCDMA), wireless fidelity (Wi-Fi), wireless LAN (WLAN), Bluetooth^{®}, Internet Protocol (IP) data casting, satellite, mobile ad-hoc network (MANET), and the like, or any combination thereof.

By way of example, the vehicles 101, mobile processing allocation platform 107, UEs 125, application/client 113, services platform 115, services 117, content providers 119, and/or satellites 127 communicate with each other and other components of the system 100 using well known, new or still developing protocols. In this context, a protocol includes a set of rules defining how the network nodes within the communication network 109 interact with each other based on information sent over the communication links. The protocols are effective at different layers of operation within each node, from generating and receiving physical signals of various types, to selecting a link for transferring those signals, to the format of information indicated by those signals, to identifying which software application executing on a computer system sends or receives the information. The conceptually different layers of protocols for exchanging information over a network are described in the Open Systems Interconnection (OSI) Reference Model.

Communications between the network nodes are typically affected by exchanging discrete packets of data. Each packet typically comprises (1) header information associated with a particular protocol, and (2) payload information that follows the header information and contains information that may be processed independently of that particular protocol. In some protocols, the packet includes (3) trailer information following the payload and indicating the end of the payload information. The header includes information such as the source of the packet, its destination, the length of the payload, and other properties used by the protocol. Often, the data in the payload for the particular protocol includes a header and payload for a different protocol associated with a different, higher layer of the OSI Reference Model. The header for a particular protocol typically indicates a type for the next protocol contained in its payload. The higher layer protocol is said to be encapsulated in the lower layer protocol. The headers included in a packet traversing multiple heterogeneous networks, such as the Internet, typically include a physical (layer 1) header, a data-link (layer 2) header, an internetwork (layer 3) header and a transport (layer 4) header, and various application (layer 5, layer 6 and layer 7) headers as defined by the OSI Reference Model.

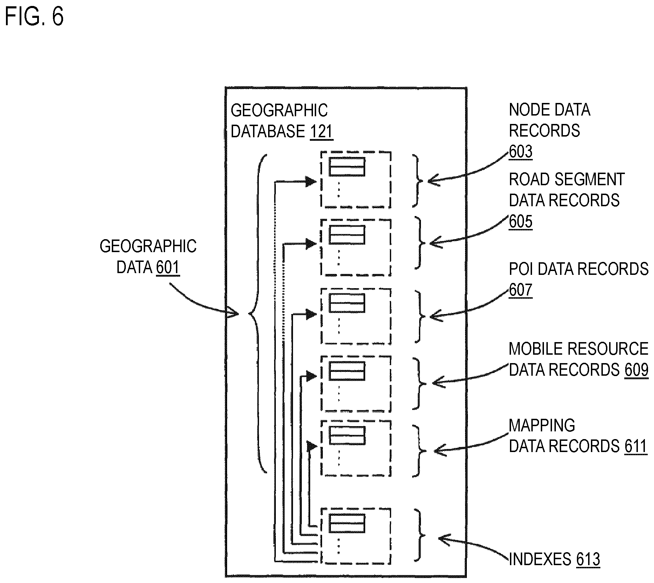

FIG. 6 is a diagram of a geographic database (such as the database 121), according to one embodiment. In one embodiment, the geographic database 121 includes geographic data 601 used for (or configured to be compiled to be used for) mapping and/or navigation-related services, such as for video odometry based on the parametric representation of lanes include, e.g., encoding and/or decoding parametric representations into lane lines. In one embodiment, the geographic database 121 include high resolution or high definition (HD) mapping data that provide centimeter-level or better accuracy of map features. For example, the geographic database 121 can be based on Light Detection and Ranging (LiDAR) or equivalent technology to collect billions of 3D points and model road surfaces and other map features down to the number lanes and their widths. In one embodiment, the mapping data (e.g., mapping data records 611) capture and store details such as the slope and curvature of the road, lane markings, roadside objects such as signposts, including what the signage denotes. By way of example, the mapping data enable highly automated vehicles to precisely localize themselves on the road.

In one embodiment, geographic features (e.g., two-dimensional or three-dimensional features) are represented using polygons (e.g., two-dimensional features) or polygon extrusions (e.g., three-dimensional features). For example, the edges of the polygons correspond to the boundaries or edges of the respective geographic feature. In the case of a building, a two-dimensional polygon can be used to represent a footprint of the building, and a three-dimensional polygon extrusion can be used to represent the three-dimensional surfaces of the building. It is contemplated that although various embodiments are discussed with respect to two-dimensional polygons, it is contemplated that the embodiments are also applicable to three-dimensional polygon extrusions. Accordingly, the terms polygons and polygon extrusions as used herein can be used interchangeably.

In one embodiment, the following terminology applies to the representation of geographic features in the geographic database 121.
"Node" - A point that terminates a link.
"Line segment" - A straight line connecting two points.
"Link" (or "edge") - A contiguous, non-branching string of one or more line segments terminating in a node at each end.
"Shape point" - A point along a link between two nodes (e.g., used to alter a shape of the link without defining new nodes).
"Oriented link" - A link that has a starting node (referred to as the "reference node") and an ending node (referred to as the "non reference node").
"Simple polygon" - An interior area of an outer boundary formed by a string of oriented links that begins and ends in one node. In one embodiment, a simple polygon does not cross itself.
"Polygon" - An area bounded by an outer boundary and none or at least one interior boundary (e.g., a hole or island). In one embodiment, a polygon is constructed from one outer simple polygon and none or at least one inner simple polygon. A polygon is simple if it just consists of one simple polygon, or complex if it has at least one inner simple polygon.

In one embodiment, the geographic database 121 follows certain conventions. For example, links do not cross themselves and do not cross each other except at a node. Also, there are no duplicated shape points, nodes, or links. Two links that connect each other have a common node. In the geographic database 121, overlapping geographic features are represented by overlapping polygons. When polygons overlap, the boundary of one polygon crosses the boundary of the other polygon. In the geographic database 121, the location at which the boundary of one polygon intersects they boundary of another polygon is represented by a node. In one embodiment, a node may be used to represent other locations along the boundary of a polygon than a location at which the boundary of the polygon intersects the boundary of another polygon. In one embodiment, a shape point is not used to represent a point at which the boundary of a polygon intersects the boundary of another polygon.

As shown, the geographic database 121 includes node data records 603, road segment or link data records 605, POI data records 607, mobile resource data records 609, mapping data records 611, and indexes 613, for example. More, fewer or different data records can be provided. In one embodiment, additional data records (not shown) can include cartographic ("carto") data records, routing data, and maneuver data. In one embodiment, the indexes 613 may improve the speed of data retrieval operations in the geographic database 121. In one embodiment, the indexes 613 may be used to quickly locate data without having to search every row in the geographic database 121 every time it is accessed. For example, in one embodiment, the indexes 613 can be a spatial index of the polygon points associated with stored feature polygons.

In exemplary embodiments, the road segment data records 605 are links or segments representing roads, streets, or paths, as can be used in the calculated route or recorded route information for determination of one or more personalized routes. The node data records 603 are end points (such as intersections) corresponding to the respective links or segments of the road segment data records 605. The road link data records 605 and the node data records 603 represent a road network, such as used by vehicles, cars, and/or other entities. Alternatively, the geographic database 121 can contain path segment and node data records or other data that represent pedestrian paths or areas in addition to or instead of the vehicle road record data, for example.

The road/link segments and nodes can be associated with attributes, such as geographic coordinates, street names, address ranges, speed limits, turn restrictions at intersections, and other navigation related attributes, as well as POIs, such as gasoline stations, hotels, restaurants, museums, stadiums, offices, automobile dealerships, auto repair shops, buildings, stores, parks, etc. The geographic database 121 can include data about the POIs and their respective locations in the POI data records 607. The geographic database 121 can also include data about places, such as cities, towns, or other communities, and other geographic features, such as bodies of water, mountain ranges, etc. Such place or feature data can be part of the POI data records 607 or can be associated with POIs or POI data records 607 (such as a data point used for displaying or representing a position of a city). In one embodiment, certain attributes, such as lane marking data records, mapping data records and/or other attributes can be features or layers associated with the link-node structure of the database.

In one embodiment, the geographic database 121 can also include mobile resource data records 609 for storing mobile resource data, mobile resource availability data, mobile resource rental data, mobile resource consumption data, training data, prediction models, annotated observations, computed featured distributions, sampling probabilities, and/or any other data generated or used by the system 100 according to the various embodiments described herein. By way of example, the mobile resource data records 609 can be associated with one or more of the node records 603, road segment records 605, and/or POI data records 607 to support localization or visual odometry based on the features stored therein and the corresponding estimated quality of the features. In this way, the records 609 can also be associated with or used to classify the characteristics or metadata of the corresponding records 603, 605, and/or 607.

In one embodiment, as discussed above, the mapping data records 611 model road surfaces and other map features to centimeter-level or better accuracy. The mapping data records 611 also include lane models that provide the precise lane geometry with lane boundaries, as well as rich attributes of the lane models. These rich attributes include, but are not limited to, lane traversal information, lane types, lane marking types, lane level speed limit information, and/or the like. In one embodiment, the mapping data records 611 are divided into spatial partitions of varying sizes to provide mapping data to vehicles 101 and other end user devices with near real-time speed without overloading the available resources of the vehicles 101 and/or devices (e.g., computational, memory, bandwidth, etc. resources).

In one embodiment, the mapping data records 611 are created from high-resolution 3D mesh or point-cloud data generated, for instance, from LiDAR-equipped vehicles. The 3D mesh or point-cloud data are processed to create 3D representations of a street or geographic environment at centimeter-level accuracy for storage in the mapping data records 611.

In one embodiment, the mapping data records 611 also include real-time sensor data collected from probe vehicles in the field. The real-time sensor data, for instance, integrates real-time traffic information, weather, and road conditions (e.g., potholes, road friction, road wear, etc.) with highly detailed 3D representations of street and geographic features to provide precise real-time also at centimeter-level accuracy. Other sensor data can include vehicle telemetry or operational data such as windshield wiper activation state, braking state, steering angle, accelerator position, and/or the like.

In one embodiment, the geographic database 121 can be maintained by the content provider 119 in association with the services platform 115 (e.g., a map developer). The map developer can collect geographic data to generate and enhance the geographic database 121. There can be different ways used by the map developer to collect data. These ways can include obtaining data from other sources, such as municipalities or respective geographic authorities. In addition, the map developer can employ field personnel to travel by vehicle (e.g., vehicles 101 and/or UEs 125) along roads throughout the geographic region to observe features and/or record information about them, for example. Also, remote sensing, such as aerial or satellite photography, can be used. In addition, the geographic database 121 can store one or more wireless network coverage maps of different data network technologies, including the road link level attributes (e.g., 5G signal availability attributes).

The geographic database 121 can be a master geographic database stored in a format that facilitates updating, maintenance, and development. For example, the master geographic database or data in the master geographic database can be in an Oracle spatial format or other spatial format, such as for development or production purposes. The Oracle spatial format or development/production database can be compiled into a delivery format, such as a geographic data files (GDF) format. The data in the production and/or delivery formats can be compiled or further compiled to form geographic database products or databases, which can be used in end user navigation devices or systems.

For example, geographic data is compiled (such as into a platform specification format (PSF) format) to organize and/or configure the data for performing navigation-related functions and/or services, such as route calculation, route guidance, map display, speed calculation, distance and travel time functions, and other functions, by a navigation device, such as by a vehicle 101 or a UE 125, for example. The navigation-related functions can correspond to vehicle navigation, pedestrian navigation, or other types of navigation. The compilation to produce the end user databases can be performed by a party or entity separate from the map developer. For example, a customer of the map developer, such as a navigation device developer or other end user device developer, can perform compilation on a received geographic database in a delivery format to produce one or more compiled navigation databases.

The processes described herein for enabling remote use of a vehicle's computational resources via wireless network data connection(s) may be advantageously implemented via software, hardware (e.g., processor (e.g., Central Processing Unit (CPU), Graphics Processing Units (GPU), etc.), Digital Signal Processing (DSP) chip, an Application Specific Integrated Circuit (ASIC), Field Programmable Gate Arrays (FPGAs), etc.), firmware or a combination thereof. Such exemplary hardware for performing the described functions is detailed below.

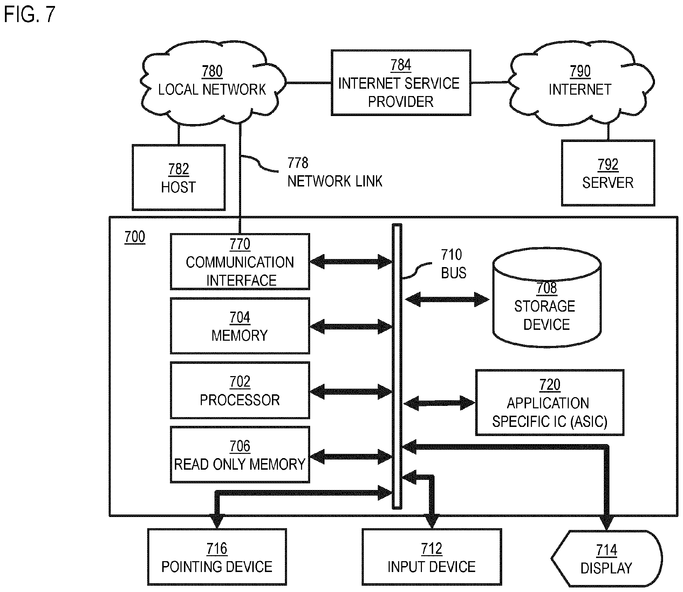

FIG. 7 illustrates a computer system 700 upon which an embodiment of the invention may be implemented. Computer system 700 is programmed (e.g., via computer program code or instructions) to enable remote use of a vehicle's computational resources via wireless network data connection(s) as described herein and includes a communication mechanism such as a bus 710 for passing information between other internal and external components of the computer system 700. Information (also called data) is represented as a physical expression of a measurable phenomenon, typically electric voltages, but including, in other embodiments, such phenomena as magnetic, electromagnetic, pressure, chemical, biological, molecular, atomic, sub-atomic and quantum interactions. For example, north and south magnetic fields, or a zero and non-zero electric voltage, represent two states (0, 1) of a binary digit (bit). Other phenomena can represent digits of a higher base. A superposition of multiple simultaneous quantum states before measurement represents a quantum bit (qubit). A sequence of one or more digits constitutes digital data that is used to represent a number or code for a character. In some embodiments, information called analog data is represented by a near continuum of measurable values within a particular range.

A bus 710 includes one or more parallel conductors of information so that information is transferred quickly among devices coupled to the bus 710. One or more processors 702 (e.g., CPUs, GPUs, etc.) for processing information are coupled with the bus 710.

A processor 702 performs a set of operations on information as specified by computer program code related to enabling remote use of a vehicle's computational resources via wireless network data connection(s). The computer program code is a set of instructions or statements providing instructions for the operation of the processor and/or the computer system to perform specified functions. The code, for example, may be written in a computer programming language that is compiled into a native instruction set of the processor. The code may also be written directly using the native instruction set (e.g., machine language). The set of operations include bringing information in from the bus 710 and placing information on the bus 710. The set of operations also typically include comparing two or more units of information, shifting positions of units of information, and combining two or more units of information, such as by addition or multiplication or logical operations like OR, exclusive OR (XOR), and AND. Each operation of the set of operations that can be performed by the processor is represented to the processor by information called instructions, such as an operation code of one or more digits. A sequence of operations to be executed by the processor 702, such as a sequence of operation codes, constitute processor instructions, also called computer system instructions or, simply, computer instructions. Processors may be implemented as mechanical, electrical, magnetic, optical, chemical or quantum components, among others, alone or in combination. A CPU, also called a main processor, is the electronic circuitry performing basic arithmetic, logic, controlling, and input/output (I/O) operations specified by the instructions in a program, contrary to specialized processors such as GPUs designed to perform large/multidimensional matrix computations, which are core tasks for image rendering, machine learning, etc.

Computer system 700 also includes a memory 704 coupled to bus 710. The memory 704, such as a random access memory (RAM) or other dynamic storage device, stores information including processor instructions for enabling remote use of a vehicle's computational resources via wireless network data connection(s). Dynamic memory allows information stored therein to be changed by the computer system 700. RAM allows a unit of information stored at a location called a memory address to be stored and retrieved independently of information at neighboring addresses. The memory 704 is also used by the processor 702 to store temporary values during execution of processor instructions. The computer system 700 also includes a read only memory (ROM) 706 or other static storage device coupled to the bus 710 for storing static information, including instructions, that is not changed by the computer system 700. Some memory is composed of volatile storage that loses the information stored thereon when power is lost. Also coupled to bus 710 is a non-volatile (persistent) storage device 708, such as a magnetic disk, optical disk or flash card, for storing information, including instructions, that persists even when the computer system 700 is turned off or otherwise loses power.

Information, including instructions for enabling remote use of a vehicle's computational resources via wireless network data connection(s), is provided to the bus 710 for use by the processor from an external input device 712, such as a keyboard containing alphanumeric keys operated by a human user, or a sensor. A sensor detects conditions in its vicinity and transforms those detections into physical expression compatible with the measurable phenomenon used to represent information in computer system 700. Other external devices coupled to bus 710, used primarily for interacting with humans, include a display device 714, such as a cathode ray tube (CRT) or a liquid crystal display (LCD), or plasma screen or printer for presenting text or images, and a pointing device 716, such as a mouse or a trackball or cursor direction keys, or motion sensor, for controlling a position of a small cursor image presented on the display 714 and issuing commands associated with graphical elements presented on the display 714. In some embodiments, for example, in embodiments in which the computer system 700 performs all functions automatically without human input, one or more of external input device 712, display device 714 and pointing device 716 is omitted.

In the illustrated embodiment, special purpose hardware, such as an application specific integrated circuit (ASIC) 720, is coupled to bus 710. The special purpose hardware is configured to perform operations not performed by processor 702 quickly enough for special purposes. Examples of application specific ICs include graphics accelerator cards for generating images for display 714, cryptographic boards for encrypting and decrypting messages sent over a network, speech recognition, and interfaces to special external devices, such as robotic arms and medical scanning equipment that repeatedly perform some complex sequence of operations that are more efficiently implemented in hardware.

Computer system 700 also includes one or more instances of a communications interface 770 coupled to bus 710. Communication interface 770 provides a one-way or two-way communication coupling to a variety of external devices that operate with their own processors, such as printers, scanners and external disks. In general the coupling is with a network link 778 that is connected to a local network 780 to which a variety of external devices with their own processors are connected. For example, communication interface 770 may be a parallel port or a serial port or a universal serial bus (USB) port on a personal computer. In some embodiments, communications interface 770 is an integrated services digital network (ISDN) card or a digital subscriber line (DSL) card or a telephone modem that provides an information communication connection to a corresponding type of telephone line. In some embodiments, a communication interface 770 is a cable modem that converts signals on bus 710 into signals for a communication connection over a coaxial cable or into optical signals for a communication connection over a fiber optic cable. As another example, communications interface 770 may be a local area network (LAN) card to provide a data communication connection to a compatible LAN, such as Ethernet. Wireless links may also be implemented. For wireless links, the communications interface 770 sends or receives or both sends and receives electrical, acoustic or electromagnetic signals, including infrared and optical signals, that carry information streams, such as digital data. For example, in wireless handheld devices, such as mobile telephones like cell phones, the communications interface 770 includes a radio band electromagnetic transmitter and receiver called a radio transceiver. In certain embodiments, the communications interface 770 enables connection to the communication network 109 for enabling remote use of a vehicle's computational resources via wireless network data connection(s) to the vehicles 101.

The term computer-readable medium is used herein to refer to any medium that participates in providing information to processor 702, including instructions for execution. Such a medium may take many forms, including, but not limited to, non-volatile media, volatile media and transmission media. Non-volatile media include, for example, optical or magnetic disks, such as storage device 708. Volatile media include, for example, dynamic memory 704. Transmission media include, for example, coaxial cables, copper wire, fiber optic cables, and carrier waves that travel through space without wires or cables, such as acoustic waves and electromagnetic waves, including radio, optical and infrared waves. Signals include man-made transient variations in amplitude, frequency, phase, polarization or other physical properties transmitted through the transmission media. Common forms of computer-readable media include, for example, a floppy disk, a flexible disk, hard disk, magnetic tape, any other magnetic medium, a CD-ROM, CDRW, DVD, any other optical medium, punch cards, paper tape, optical mark sheets, any other physical medium with patterns of holes or other optically recognizable indicia, a RAM, a PROM, an EPROM, a FLASH-EPROM, any other memory chip or cartridge, a carrier wave, or any other medium from which a computer can read.

Network link 778 typically provides information communication using transmission media through one or more networks to other devices that use or process the information. For example, network link 778 may provide a connection through local network 780 to a host computer 782 or to equipment 784 operated by an Internet Service Provider (ISP). ISP equipment 784 in turn provides data communication services through the public, world-wide packet-switching communication network of networks now commonly referred to as the Internet 790.

A computer called a server host 792 connected to the Internet hosts a process that provides a service in response to information received over the Internet. For example, server host 792 hosts a process that provides information representing video data for presentation at display 714. It is contemplated that the components of system can be deployed in various configurations within other computer systems, e.g., host 782 and server 792.

FIG. 8 illustrates a chip set 800 upon which an embodiment of the invention may be implemented. Chip set 800 is programmed to enable remote use of a vehicle's computational resources via wireless network data connection(s) as described herein and includes, for instance, the processor and memory components described with respect to FIG. 7 incorporated in one or more physical packages (e.g., chips). By way of example, a physical package includes an arrangement of one or more materials, components, and/or wires on a structural assembly (e.g., a baseboard) to provide one or more characteristics such as physical strength, conservation of size, and/or limitation of electrical interaction. It is contemplated that in certain embodiments the chip set can be implemented in a single chip.

In one embodiment, the chip set 800 includes a communication mechanism such as a bus 801 for passing information among the components of the chip set 800. A processor 803 has connectivity to the bus 801 to execute instructions and process information stored in, for example, a memory 805. The processor 803 may include one or more processing cores with each core configured to perform independently. A multi-core processor enables multiprocessing within a single physical package. Examples of a multi-core processor include two, four, eight, or greater numbers of processing cores. Alternatively or in addition, the processor 803 may include one or more microprocessors configured in tandem via the bus 801 to enable independent execution of instructions, pipelining, and multithreading. The processor 803 may also be accompanied with one or more specialized components to perform certain processing functions and tasks such as one or more digital signal processors (DSP) 807, or one or more application-specific integrated circuits (ASIC) 809. A DSP 807 typically is configured to process real-world signals (e.g., sound) in real time independently of the processor 803. Similarly, an ASIC 809 can be configured to performed specialized functions not easily performed by a general purposed processor. Other specialized components to aid in performing the inventive functions described herein include one or more field programmable gate arrays (FPGA) (not shown), one or more controllers (not shown), or one or more other special-purpose computer chips.

The processor 803 and accompanying components have connectivity to the memory 805 via the bus 801. The memory 805 includes both dynamic memory (e.g., RAM, magnetic disk, writable optical disk, etc.) and static memory (e.g., ROM, CD-ROM, etc.) for storing executable instructions that when executed perform the inventive steps described herein to enable remote use of a vehicle's computational resources via wireless network data connection(s). The memory 805 also stores the data associated with or generated by the execution of the inventive steps.

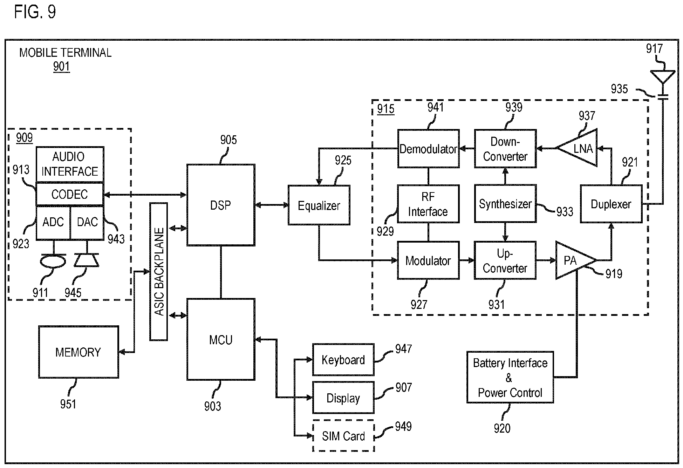

FIG. 9 is a diagram of exemplary components of a mobile terminal 901 (e.g., handset or vehicle or part thereof) capable of operating in the system of FIG. 1, according to one embodiment. Generally, a radio receiver is often defined in terms of front-end and back-end characteristics. The front-end of the receiver encompasses all of the Radio Frequency (RF) circuitry whereas the back-end encompasses all of the base-band processing circuitry. Pertinent internal components of the telephone include a Main Control Unit (MCU) 903, a Digital Signal Processor (DSP) 905, and a receiver/transmitter unit including a microphone gain control unit and a speaker gain control unit. A main display unit 907 provides a display to the user in support of various applications and mobile station functions that offer automatic contact matching. An audio function circuitry 909 includes a microphone 911 and microphone amplifier that amplifies the speech signal output from the microphone 911. The amplified speech signal output from the microphone 911 is fed to a coder/decoder (CODEC) 913.

A radio section 915 amplifies power and converts frequency in order to communicate with a base station, which is included in a mobile communication system, via antenna 917. The power amplifier (PA) 919 and the transmitter/modulation circuitry are operationally responsive to the MCU 903, with an output from the PA 919 coupled to the duplexer 921 or circulator or antenna switch, as known in the art. The PA 919 also couples to a battery interface and power control unit 920.

In use, a user of mobile station 901 speaks into the microphone 911 and his or her voice along with any detected background noise is converted into an analog voltage. The analog voltage is then converted into a digital signal through the Analog to Digital Converter (ADC) 923. The control unit 903 routes the digital signal into the DSP 905 for processing therein, such as speech encoding, channel encoding, encrypting, and interleaving. In one embodiment, the processed voice signals are encoded, by units not separately shown, using a cellular transmission protocol such as global evolution (EDGE), general packet radio service (GPRS), global system for mobile communications (GSM), Internet protocol multimedia subsystem (IMS), universal mobile telecommunications system (UMTS), etc., as well as any other suitable wireless medium, e.g., microwave access (WiMAX), Long Term Evolution (LTE) networks, code division multiple access (CDMA), wireless fidelity (WiFi), satellite, and the like.

The encoded signals are then routed to an equalizer 925 for compensation of any frequency-dependent impairments that occur during transmission though the air such as phase and amplitude distortion. After equalizing the bit stream, the modulator 927 combines the signal with a RF signal generated in the RF interface 929. The modulator 927 generates a sine wave by way of frequency or phase modulation. In order to prepare the signal for transmission, an up-converter 931 combines the sine wave output from the modulator 927 with another sine wave generated by a synthesizer 933 to achieve the desired frequency of transmission. The signal is then sent through a PA 919 to increase the signal to an appropriate power level. In practical systems, the PA 919 acts as a variable gain amplifier whose gain is controlled by the DSP 905 from information received from a network base station. The signal is then filtered within the duplexer 921 and optionally sent to an antenna coupler 935 to match impedances to provide maximum power transfer. Finally, the signal is transmitted via antenna 917 to a local base station. An automatic gain control (AGC) can be supplied to control the gain of the final stages of the receiver. The signals may be forwarded from there to a remote telephone which may be another cellular telephone, other mobile phone or a land-line connected to a Public Switched Telephone Network (PSTN), or other telephony networks.

Voice signals transmitted to the mobile station 901 are received via antenna 917 and immediately amplified by a low noise amplifier (LNA) 937. A down-converter 939 lowers the carrier frequency while the demodulator 941 strips away the RF leaving only a digital bit stream. The signal then goes through the equalizer 925 and is processed by the DSP 905. A Digital to Analog Converter (DAC) 943 converts the signal and the resulting output is transmitted to the user through the speaker 945, all under control of a Main Control Unit (MCU) 903-which can be implemented as a Central Processing Unit (CPU) (not shown).

The MCU 903 receives various signals including input signals from the keyboard 947. The keyboard 947 and/or the MCU 903 in combination with other user input components (e.g., the microphone 911) comprise a user interface circuitry for managing user input. The MCU 903 runs a user interface software to facilitate user control of at least some functions of the mobile station 901 to enable remote use of a vehicle's computational resources via wireless network data connection(s). The MCU 903 also delivers a display command and a switch command to the display 907 and to the speech output switching controller, respectively. Further, the MCU 903 exchanges information with the DSP 905 and can access an optionally incorporated SIM card 949 and a memory 951. In addition, the MCU 903 executes various control functions required of the station. The DSP 905 may, depending upon the implementation, perform any of a variety of conventional digital processing functions on the voice signals. Additionally, DSP 905 determines the background noise level of the local environment from the signals detected by microphone 911 and sets the gain of microphone 911 to a level selected to compensate for the natural tendency of the user of the mobile station 901.

The CODEC 913 includes the ADC 923 and DAC 943. The memory 951 stores various data including call incoming tone data and is capable of storing other data including music data received via, e.g., the global Internet. The software module could reside in RAM memory, flash memory, registers, or any other form of writable computer-readable storage medium known in the art including non-transitory computer-readable storage medium. For example, the memory device 951 may be, but not limited to, a single memory, CD, DVD, ROM, RAM, EEPROM, optical storage, or any other non-volatile or non-transitory storage medium capable of storing digital data.

An optionally incorporated SIM card 949 carries, for instance, important information, such as the cellular phone number, the carrier supplying service, subscription details, and security information. The SIM card 949 serves primarily to identify the mobile station 901 on a radio network. The card 949 also contains a memory for storing a personal telephone number registry, text messages, and user specific mobile station settings.

While the invention has been described in connection with a number of embodiments and implementations, the invention is not so limited but covers various obvious modifications and equivalent arrangements, which fall within the purview of the appended claims. Although features of the invention are expressed in certain combinations among the claims, it is contemplated that these features can be arranged in any combination and order.

## Claims

1. A method comprising:
determining, by one or more processors, location data associated with a mobile computing system (105);
processing, by the one or more processors, the location data to determine a transmission availability schedule for transmission of data to and/or from the mobile computing system (105) via one or more wireless network connections;
generating, by the one or more processors, a processing availability schedule (240) for the mobile computing system (105) based at least on the transmission availability schedule, wherein the processing availability schedule (240) indicates when a computational resource of the mobile computing system (105) is available for a remote use that is initiated over the one or more wireless network connections and further indicates a type of the one or more wireless network connections that is available during one or more available time slots, wherein the one or more wireless network connections satisfy one or more threshold criteria including a minimum network bandwidth, a minimum network latency, or a combination thereof for transmitting remote data to be processed by the computational resource during the remote use, receiving data processed by the computational resource, or a combination thereof; and
providing, by the one or more processors, the processing availability schedule (240) as an output.

2. The method of claim 1, wherein the computational resource is configured for a machine learning application associated with the remote use.

3. The method of claim 1, wherein the mobile computing system is equipped in a vehicle, and wherein the location data includes one or more estimated or planned future locations of the vehicle.

4. The method of claim 1, wherein the mobile computing system (105) is used for an operation of a vehicle, and the generating of the processing availability schedule (240) comprises: determining that the computational resource is available based on a threshold level of use of the computational resource.

5. The method of claim 1, wherein the processing availability schedule (240) is further based on determining where and when the mobile computing system (105) is estimated or planned to be stationary in an area, or to move with the computational resource operating under a threshold level of use.

6. The method of claim 1, further comprising:
Presenting a user interface on a device based on the processing availability schedule (240),
wherein the user interface provides a function to identify that the computational resource is available, to reserve the computational resource for the remote use, or a combination thereof.

7. The method of claim 6, further comprising:
receiving an input via the user interface indicating a computational requirement associated with the remote use,
wherein the computational resource is determined to be available further based on the computational requirement.

8. The method of claim 1, further comprising:
tracking a time duration, a level of use, or a combination thereof of the remote use, or of the computational resource.

9. The method of claim 1, further comprising:
recording a proof of work on a blockchain after completion of the remote use of the computational resource.

10. The method of claim 1, wherein the mobile computing system is part of a fleet of a plurality of mobile computing systems, and wherein the processing availability schedule (240) is generated for the fleet.

11. The method of claim 11, further comprising:
monitoring data processing loads of the plurality of mobile computing systems;
relocating data to be processed to one or more of the plurality of mobile computing systems (105) based on the data processing loads; and
updating the processing availability schedule (240) based on the relocating.

12. An apparatus comprising:
at least one processor; and
at least one memory including computer program code for one or more programs,
the at least one memory and the computer program code configured to, with the at least one processor, cause the apparatus to perform at least the following:
determine location data associated with a mobile computing system;
process the location data to determine a transmission availability schedule for transmission of data to and/or from the mobile computing system via one or more wireless network connections;
generate a processing availability schedule (240) for the mobile computing system (105) based at least on the transmission availability schedule, wherein the processing availability schedule (240) indicates when a computational resource of the mobile computing system (105) is available for a remote use that is initiated over the one or more wireless network connections and further indicates a type of the one or more wireless network connections that is available during one or more available time slots, wherein the one or more wireless network connections satisfy one or more threshold criteria including a minimum network bandwidth, a minimum network latency, or a combination thereof for transmitting remote data to be processed by the computational resource during the remote use, receiving data processed by the computational resource, or a combination thereof; and
provide the processing availability schedule (240) as an output.

13. A non-transitory computer-readable storage medium carrying one or more sequences of one or more instructions which, when executed by one or more processors, cause an apparatus to perform:
determining location data associated with a mobile computing system (105);
processing the location data to determine a transmission availability schedule for transmission of data to and/or from the mobile computing system via one or more wireless network connections;
generating a processing availability schedule (240) for the mobile computing system (105) based at least on the transmission availability schedule, wherein the processing availability schedule (240) indicates when a computational resource of the mobile computing system (105) is available for a remote use that is initiated over the one or more wireless network connections and further indicates a type of the one or more wireless network connections that is available during one or more available time slots, wherein the one or more wireless network connections satisfy one or more threshold criteria including a minimum network bandwidth, a minimum network latency, or a combination thereof for transmitting remote data to be processed by the computational resource during the remote use, receiving data processed by the computational resource, or a combination thereof; and
providing the processing availability schedule (240) as an output.

## Patentansprüche

1. Verfahren, umfassend:
Bestimmen von Standortdaten, die mit einem mobilen Rechensystem (105) verbunden sind, durch einen oder mehrere Prozessoren;
Verarbeiten der Standortdaten durch den einen oder die mehreren Prozessoren, um einen Übertragungsverfügbarkeitsplan für die Übertragung von Daten zu und/oder von dem mobilen Rechensystem (105) über eine oder mehrere drahtlose Netzwerkverbindungen zu bestimmen;
Erzeugen eines Verarbeitungsverfügbarkeitsplans (240) für das mobile Rechensystem (105) basierend auf mindestens dem Übertragungsverfügbarkeitsplan, wobei der Verarbeitungsverfügbarkeitsplan (240) angibt, wann eine Rechenressource des mobilen Rechensystems (105) für eine Fernnutzung verfügbar ist, die über die eine oder mehreren drahtlosen Netzwerkverbindungen initiiert wird, und ferner einen Typ der einen oder mehreren drahtlosen Netzwerkverbindungen angibt, die während eines oder mehrerer verfügbarer Zeitschlitze verfügbar sind, wobei die eine oder mehreren drahtlosen Netzwerkverbindungen ein oder mehrere Schwellenkriterien erfüllen, die eine minimale Netzwerkbandbreite, eine minimale Netzwerklatenz oder eine Kombination davon zum Senden von Ferndaten, die von der Rechenressource während der Fernnutzung verarbeitet werden sollen, zum Empfangen von Daten, die von der Rechenressource verarbeitet wurden, oder eine Kombination davon einschließen; und
Bereitstellen des Verarbeitungsverfügbarkeitsplans (240) durch den einen oder die mehreren Prozessoren als Ausgabe.

2. Verfahren nach Anspruch 1, wobei die Rechenressource für eine maschinell lernende Anwendung konfiguriert ist, die mit der Fernnutzung verbunden ist.

3. Verfahren nach Anspruch 1, wobei das mobile Rechensystem in einem Fahrzeug ausgerüstet ist und wobei die Standortdaten einen oder mehrere geschätzte oder geplante zukünftige Standorte des Fahrzeugs einschließen.

4. Verfahren nach Anspruch 1, wobei das mobile Rechensystem (105) für einen Betrieb eines Fahrzeugs verwendet wird und das Erzeugen des Verarbeitungsverfügbarkeitsplans (240) Folgendes umfasst:
Bestimmen, ob die Rechenressource verfügbar ist, basierend auf einem Schwellenwert für die Nutzung der Rechenressource.

5. Verfahren nach Anspruch 1, wobei der Verarbeitungsverfügbarkeitsplan (240) ferner darauf basiert, zu bestimmen, wo und wann das mobile Rechensystem (105) voraussichtlich oder geplant in einem Bereich stationär ist oder sich mit der unter einem Schwellenwert der Nutzung arbeitenden Rechenressource bewegt.

6. Verfahren nach Anspruch 1, ferner umfassend:
Darstellen einer Benutzerschnittstelle auf einer Vorrichtung basierend auf dem Verarbeitungsverfügbarkeitsplan (240),
wobei die Benutzerschnittstelle eine Funktion bereitstellt, um zu identifizieren, dass die Rechenressource verfügbar ist, um die Rechenressource für die Fernnutzung zu reservieren, oder eine Kombination davon.

7. Verfahren nach Anspruch 6, ferner umfassend:
Empfangen einer Eingabe über die Benutzerschnittstelle, die einen mit der Fernnutzung verbundenen Rechenbedarf anzeigt,
wobei die Rechenressource ferner basierend auf dem Rechenbedarf als verfügbar bestimmt wird.

8. Verfahren nach Anspruch 1, ferner umfassend:
Nachverfolgen einer Zeitdauer, eines Nutzungsgrades oder einer Kombination davon der Fernnutzung oder der Rechenressource.

9. Verfahren nach Anspruch 1, ferner umfassend:
Aufzeichnen eines Arbeitsnachweises auf einer Blockchain nach Abschluss der Fernnutzung der Rechenressource.

10. Verfahren nach Anspruch 1, wobei das mobile Rechensystem Teil einer Flotte von mehreren mobilen Rechensystemen ist, und wobei der Verarbeitungsverfügbarkeitsplan (240) für die Flotte erzeugt wird.

11. Verfahren nach Anspruch 11, ferner umfassend:
Überwachen der Datenverarbeitungslasten der Vielzahl von mobilen Rechensystemen;
Verlegen der zu verarbeitenden Daten zu einem oder mehreren der Vielzahl von mobilen Rechensystemen (105), basierend auf den Datenverarbeitungslasten; und
Aktualisieren des Verarbeitungsverfügbarkeitsplans (240) basierend auf der Verlegung.

12. Gerät, umfassend:
mindestens einen Prozessor; und
mindestens einen Speicher einschließlich Computerprogrammcode für ein oder mehrere Programme, wobei der mindestens eine Speicher und der Computerprogrammcode konfiguriert sind, um die Vorrichtung mit dem mindestens einen Prozessor zu veranlassen, mindestens das Folgende auszuführen:
Bestimmen von Standortdaten in Verbindung mit einem mobilen Rechensystem;
Verarbeiten der Standortdaten, um einen Übertragungsverfügbarkeitszeitplan für die Übertragung von Daten zu und/oder von dem mobilen Rechensystem über eine oder mehrere drahtlose Netzwerkverbindungen zu bestimmen;
Erzeugen eines Verarbeitungsverfügbarkeitsplans (240) für das mobile Rechensystem (105) mindestens basierend auf dem Übertragungsverfügbarkeitsplan, wobei der Verarbeitungsverfügbarkeitsplan (240) anzeigt, wann eine Rechenressource des mobilen Rechensystems (105) für eine Fernnutzung verfügbar ist, die über die eine oder mehrere drahtlose Netzwerkverbindungen initiiert wird, und ferner einen Typ der einen oder mehreren drahtlosen Netzwerkverbindungen anzeigt, der während eines oder mehrerer verfügbarer Zeitschlitze verfügbar ist, wobei die eine oder mehreren drahtlosen Netzwerkverbindungen ein oder mehrere Schwellenkriterien erfüllen, die eine minimale Netzwerkbandbreite, eine minimale Netzwerklatenz oder eine Kombination davon zum Senden von Ferndaten, die von der Rechenressource während der Fernnutzung verarbeitet werden sollen, zum Empfangen von Daten, die von der Rechenressource verarbeitet wurden, oder eine Kombination davon einschließen; und
Bereitstellen des Verarbeitungsverfügbarkeitsplans (240) als Ausgabe.

13. Nicht-transitorisches, computerlesbares Speichermedium, das eine oder mehrere Sequenzen von einer oder mehreren Anweisungen trägt, die, wenn sie von einem oder mehreren Prozessoren ausgeführt werden, ein Gerät zur Durchführung von Folgendem veranlassen:
Bestimmen von Standortdaten, die einem mobilen Rechensystem (105) zugeordnet sind;
Verarbeiten der Standortdaten, um einen Übertragungsverfügbarkeitszeitplan für die Übertragung von Daten zu und/oder von dem mobilen Rechensystem über eine oder mehrere drahtlose Netzwerkverbindungen zu bestimmen;
Erzeugen eines Verarbeitungsverfügbarkeitsplans (240) für das mobile Rechensystem (105) mindestens basierend auf dem Übertragungsverfügbarkeitsplan, wobei der Verarbeitungsverfügbarkeitsplan (240) anzeigt, wann eine Rechenressource des mobilen Rechensystems (105) für eine Fernnutzung verfügbar ist, die über die eine oder mehrere drahtlose Netzwerkverbindungen initiiert wird, und ferner einen Typ der einen oder mehreren drahtlosen Netzwerkverbindungen anzeigt, der während eines oder mehrerer verfügbarer Zeitschlitze verfügbar ist, wobei die eine oder mehreren drahtlosen Netzwerkverbindungen ein oder mehrere Schwellenkriterien erfüllen, die eine minimale Netzwerkbandbreite, eine minimale Netzwerklatenz oder eine Kombination davon zum Senden von Ferndaten, die von der Rechenressource während der Fernnutzung verarbeitet werden sollen, zum Empfangen von Daten, die von der Rechenressource verarbeitet wurden, oder eine Kombination davon einschließen; und
Bereitstellen des Verarbeitungsverfügbarkeitsplans (240) als Ausgabe.

## Revendications

1. Procédé comprenant :
la détermination, par un ou plusieurs processeurs, de données d'emplacement associées à un système informatique mobile (105) ;
le traitement, par les un ou plusieurs processeurs, des données d'emplacement pour déterminer un planning de disponibilité de transmission pour la transmission de données vers et/ou depuis le système informatique mobile (105) par l'intermédiaire d'une ou plusieurs connexions réseau sans fil ;
la génération, par les un ou plusieurs processeurs, d'un planning de disponibilité de traitement (240) pour le système informatique mobile (105) au moins sur la base du planning de disponibilité de transmission, dans lequel le planning de disponibilité de traitement (240) indique quand une ressource informatique du système informatique mobile (105) est disponible pour une utilisation à distance qui est initiée via les une ou plusieurs connexions réseau sans fil et indique également un type des une ou plusieurs connexions réseau sans fil qui est disponible pendant un ou plusieurs créneaux horaires disponibles, dans lequel les une ou plusieurs connexions réseau sans fil satisfont à un ou plusieurs critères de seuil comportant une bande passante réseau minimale, une latence réseau minimale, ou une combinaison des deux pour la transmission de données distantes à traiter par la ressource informatique pendant l'utilisation à distance, la réception de données traitées par la ressource informatique, ou une combinaison des deux ; et
la fourniture, par les un ou plusieurs processeurs, du planning de disponibilité de traitement (240) en tant que sortie.

2. Procédé selon la revendication 1, dans lequel la ressource informatique est configurée pour une application d'apprentissage automatique associée à l'utilisation à distance.

3. Procédé selon la revendication 1, dans lequel le système informatique mobile est équipé dans un véhicule, et dans lequel les données d'emplacement comportent un ou plusieurs emplacements futurs estimés ou planifiés du véhicule.

4. Procédé selon la revendication 1, dans lequel le système informatique mobile (105) est utilisé pour un fonctionnement d'un véhicule, et la génération du planning de disponibilité de traitement (240) comprend :
la détermination que la ressource informatique est disponible sur la base d'un niveau seuil d'utilisation de la ressource informatique.

5. Procédé selon la revendication 1, dans lequel le planning de disponibilité de traitement (240) est également basé sur la détermination de l'endroit et du moment où le système informatique mobile (105) est estimé ou planifié pour être stationnaire dans une zone, ou pour se déplacer avec la ressource informatique fonctionnant sous un niveau seuil d'utilisation.

6. Procédé selon la revendication 1, comprenant également :
La présentation d'une interface utilisateur sur un dispositif sur la base du planning de disponibilité de traitement (240),
dans lequel l'interface utilisateur fournit une fonction permettant d'identifier que la ressource informatique est disponible, de réserver la ressource informatique pour une utilisation à distance, ou une combinaison des deux.

7. Procédé selon la revendication 6, comprenant également :
la réception d'une entrée par l'intermédiaire de l'interface utilisateur indiquant une exigence informatique associée à l'utilisation à distance,
dans lequel la ressource informatique est déterminée comme étant disponible, également sur la base de l'exigence informatique.

8. Procédé selon la revendication 1, comprenant également :
le suivi d'une durée, d'un niveau d'utilisation, ou d'une combinaison des deux de l'utilisation à distance, ou de la ressource informatique.

9. Procédé selon la revendication 1, comprenant également :
l'enregistrement d'une preuve de travail sur une chaîne de blocs après l'achèvement de l'utilisation à distance de la ressource informatique.

10. Procédé selon la revendication 1, dans lequel le système informatique mobile fait partie d'une flotte d'une pluralité de systèmes informatiques mobiles, et dans lequel le planning de disponibilité de traitement (240) est généré pour la flotte.

11. Procédé selon la revendication 11, comprenant également :
la surveillance de charges de traitement de données de la pluralité de systèmes informatiques mobiles ;
le déplacement de données à traiter vers un ou plusieurs systèmes de la pluralité de systèmes informatiques mobiles (105) sur la base des charges de traitement des données ; et
la mise à jour du planning de disponibilité de traitement (240) sur la base du déplacement.

12. Appareil comprenant :
au moins un processeur ; et
au moins une mémoire comportant un code de programme informatique pour un ou plusieurs programmes, l'au moins une mémoire et le code de programme informatique étant configurés pour, avec l'au moins un processeur, amener l'appareil à réaliser au moins les opérations suivantes :
déterminer des données d'emplacement associées à un système informatique mobile ;
traiter les données d'emplacement pour déterminer un planning de disponibilité de transmission pour la transmission de données vers et/ou depuis le système informatique mobile par l'intermédiaire d'une ou plusieurs connexions réseau sans fil ;
générer un planning de disponibilité de traitement (240) pour le système informatique mobile (105) au moins sur la base du planning de disponibilité de transmission, dans lequel le planning de disponibilité de traitement (240) indique quand une ressource informatique du système informatique mobile (105) est disponible pour une utilisation à distance qui est initiée via les une ou plusieurs connexions réseau sans fil et indique également un type des une ou plusieurs connexions réseau sans fil qui est disponible pendant un ou plusieurs créneaux horaires disponibles, dans lequel les une ou plusieurs connexions réseau sans fil satisfont à un ou plusieurs critères de seuil comportant une bande passante réseau minimale, une latence réseau minimale, ou une combinaison des deux, pour la transmission de données distantes à traiter par la ressource informatique pendant l'utilisation à distance, la réception de données traitées par la ressource informatique, ou une combinaison des deux ; et
fournir le planning de disponibilité de traitement (240) en tant que sortie.

13. Support de stockage non transitoire lisible par ordinateur contenant une ou plusieurs séquences d'une ou plusieurs instructions qui, lorsqu'elles sont exécutées par un ou plusieurs processeurs, amènent un appareil à réaliser :
la détermination de données d'emplacement associées à un système informatique mobile (105) ;
le traitement des données d'emplacement pour déterminer un planning de disponibilité de transmission pour la transmission de données vers et/ou depuis le système informatique mobile par l'intermédiaire d'une ou plusieurs connexions réseau sans fil ;
la génération d'un planning de disponibilité de traitement (240) pour le système informatique mobile (105) au moins sur la base du planning de disponibilité de transmission, dans lequel le planning de disponibilité de traitement (240) indique quand une ressource informatique du système informatique mobile (105) est disponible pour une utilisation à distance qui est initiée via les une ou plusieurs connexions réseau sans fil et indique également un type des une ou plusieurs connexions réseau sans fil qui est disponible pendant un ou plusieurs créneaux horaires disponibles, dans lequel les une ou plusieurs connexions réseau sans fil satisfont à un ou plusieurs critères de seuil comportant une bande passante réseau minimale, une latence réseau minimale, ou une combinaison des deux, pour la transmission de données distantes à traiter par la ressource informatique pendant l'utilisation à distance, la réception de données traitées par la ressource informatique, ou une combinaison des deux ; et
la fourniture du planning de disponibilité de traitement (240) en tant que sortie.
